# EUROPEAN PATENT APPLICATION

(11) **EP 4 799 731 A1**
(43) Date of publication of application: **02.09.2026**
(21) Application number: 25803506.2
(22) Date of filing: 08.05.2025
(51) Int. Cl.: B01L 3/02

(54) **POWDER SUPPLY DEVICE AND POWDER SUPPLY METHOD**

(30) Priority: 15.05.2024 JP 2024079709
(71) Applicant: Musashi Engineering, Inc., Mitaka-shi, Tokyo 181-0011 (JP)
(72) Inventor: IKUSHIMA, Kazumasa, Mitaka-shi, Tokyo 181-0011 (JP)
(74) Representative: TBK
(86) International application number: PCT/JP2025/016794
(87) International publication number: WO 2025/239257

(57) **Abstract**

Problem: To provide a powder supply device and a powder supply method which can remove surplus powder adhering to a suction meter having a metering chamber and a suction port through a simple process.

Solution: A powder supply device 1 includes: a suction meter 13 having a metering chamber 15 connected to a negative pressure source and bounded by a filter 14, and a suction port provided at a distal end; a nozzle 12 that is moved in a relative manner by a relative movement robot (501, 502, 503); and a powder removing brush 20 having brush bristles 22 extending in a direction intersecting with a vertical direction. The powder supply device 1 buries the distal end of the suction meter 13 in powder within a powder tank 101 and sucks the powder into the metering chamber 15. After sucking the powder, surplus powder adhering to the suction meter 13 is removed by moving the suction meter 13 and the brush bristles 22 relative to each other while elastically deforming the brush bristles 22. A powder supply method is also provided.

## Description

### Technical Field

The present invention relates to a powder supply device that sucks and discharges powder, and a powder supply method.

### Background Art

There is known a powder supply device called powder pipette which sucks a desired amount of powder into a tip having a filter and discharges it at a desired position. For example, Patent Document 1 discloses a powder dispensing device including: a powder dispensing tip having a filter with fine pores; a nozzle having a distal end that removably holds the tip; a pump; a means that connects the nozzle to a sucking side of the pump; a means that connects the nozzle to a discharging side of the pump; and a means for switching between the first and second means.

When powder is sucked by the powder pipette, surplus powder adheres to an outer periphery portion of the tip, which would pose a problem where the surplus powder causes a metering error and a problem where the surplus powder falls on an unintended area. In Fig. 3 of Patent Document 2, as a related art, it is disclosed that a filling piston is provided with a powder cleaning stand in which a hole is formed with a predetermined clearance from an outer periphery of the filling piston to clean excess powder adhering to the outer periphery, and a striking-off blade is used to remove excess powder adhering below a lower end surface of the filling piston. In Fig. 1 of Patent Document 2, a powder cleaning stand having a filter that communicates with a vacuum source is disclosed.

### Patent Document

Patent Document 1: Japanese Patent Laid-Open Publication No. H10-263421
Patent Document 2: Japanese Examined Utility Model Publication No. H04-11921

### Summary of the Invention

### Problems to be Solved by the Invention

According to the method disclosed in Patent Document 2, surplus powder adhering to the filling piston can be removed to some extent. However, as the method employs a mechanism that causes surplus powder on the outer peripheral surface of the filling piston to fall by sliding on a solid powder layer 17, there is a problem in that hardly-removable powder remains on the outer peripheral surface of the filling piston.

In addition, since it is necessary to prepare the powder cleaning stand having a filter that communicates with a vacuum source for the method of Patent Document 2, there is a problem in that it is difficult to downsize the device.

Further, it is necessary to insert the filling piston into the hole of the powder cleaning stand to perform filling and to strike off surplus powder on the lower end of the filling piston for removal, leading to a complicated process for powder supply work.

An object of the present invention is to provide a powder supply device and a powder supply method which can remove surplus powder adhering to a suction meter having a metering chamber and a suction port through a simple process.

### Means for Solving the Problems

A powder supply device according to the present invention includes the following technical means.
[1] A powder supply device including: a suction meter having a metering chamber bounded by a filter and a suction port provided at a distal end; a nozzle configured to apply negative pressure to the metering chamber; a powder removing brush having brush bristles extending in a direction intersecting with a vertical direction; a relative movement robot configured to move the suction meter and the powder removing brush relative to each other; and a control device configured to control operation of the relative movement robot, wherein the powder supply device is configured to bury, by the relative movement robot, the distal end of the suction meter in powder within a powder tank and suck the powder into the metering chamber, wherein, after sucking the powder, the control device is configured to remove surplus powder adhering to the suction meter by performing relative movement of the suction meter and the brush bristles by the relative movement robot while elastically deforming the brush bristles.
[2] The powder supply device according to [1], wherein the powder removing brush includes a bristle implanted member in which a great number of the brush bristles are implanted.
[3] The powder supply device according to [2], wherein, in the bristle implanted member, the brush bristles are implanted so as to extend in a horizontal direction in a distal end portion and at least a part of a portion between the distal end portion and a base portion.
[4] The powder supply device according to [3], wherein, in the bristle implanted member, the brush bristles are implanted so as to extend obliquely upward in the base portion.
[5] The powder supply device according to [3], wherein, in the bristle implanted member, the brush bristles are implanted so as to extend obliquely downward in the base portion, and the powder supply device further includes a brush bristle guide member that supports a portion between the distal end portion and the base portion of the brush bristles.
[6] The powder supply device according to [2], wherein the brush bristles have a layered bristle structure in which brush bristle layers are stacked in an up-and-down direction.
[7] The powder supply device according to [6], wherein, after sucking the powder, the control device can remove surplus powder adhering to an outer peripheral surface and the distal end of the suction meter by raising the suction meter such that the distal end of the suction meter is located above a lower end of a lowermost brush bristle layer of the layered bristle structure and below a lower end of an uppermost brush bristle layer and then performing the relative movement.
[8] The powder supply device according to any one of [1] to [4], wherein the powder removing brush includes a first powder removing brush and a second powder removing brush disposed with its bristle ends facing brush bristles of the first powder removing brush.
[9] The powder supply device according to [8], wherein the first powder removing brush includes a first bristle implanted member in which a great number of the brush bristles are implanted so as to extend in a horizontal direction in a distal end portion and at least a part of a portion between the distal end portion and a base portion, and the second powder removing brush includes a second bristle implanted member in which a great number of the brush bristles are implanted so as to extend in the horizontal direction in a distal end portion and at least a part of a portion between the distal end portion and a base portion.
[10] The powder supply device according to [9], wherein, in each of the first and second bristle implanted members, the brush bristles are implanted so as to extend obliquely upward in the base portion.
[11] The powder supply device according to [9], wherein, in each of the first and second bristle implanted members, the brush bristles are implanted so as to extend obliquely downward in the base portion, and the powder supply device further includes a first brush bristle guide member that supports a portion between the distal end portion and the base portion of the brush bristles of the first powder removing brush, and a second brush bristle guide member that supports a portion between the distal end portion and the base portion of the brush bristles of the second powder removing brush.
[12] The powder supply device according to [8], including a supporter that supports the first powder removing brush and the second powder removing brush, wherein the first powder removing brush and the second powder removing brush constitute a cover member that covers at least a part of the powder tank.
[13] The powder supply device according to [12], wherein the supporter includes an engaging portion for engaging with the powder tank.
[14] The powder supply device according to [12], wherein the supporter includes a placing portion for self-support in the powder tank.
[15] The powder supply device according to any one of [12] to [14], wherein the first powder removing brush includes a first upper-stage removing brush and a first lower-stage removing brush, the second powder removing brush includes a second upper-stage removing brush and a second lower-stage removing brush, and the first upper-stage removing brush and the second upper-stage removing brush constitute an upper-stage cover member that covers at least a part of the powder tank, and the first lower-stage removing brush and the second lower-stage removing brush constitute a lower-stage cover member that covers at least a part of the powder tank.
[16] The powder supply device according to any one of [1] to [15], wherein the brush bristles are conductive-material bristles that neutralize static electricity on the suction meter by contact with the suction meter.
[17] The powder supply device according to any one of [1] to [7], wherein the brush bristles are conductive-material bristles that neutralize static electricity on the suction meter by contact with the suction meter, and a bristle implanted member in which a great number of the brush bristles are implanted is provided, the bristle implanted member being a conductive member connected with a ground wire.
[18] The powder supply device according to any one of [1] to [17], wherein the powder removing brush includes a bristle implanted member having an arc-shaped inside surface in which the brush bristles are implanted, the brush bristles extending toward a center.
[19] The powder supply device according to any one of [1] to [7], wherein the powder removing brush includes a bristle implanted member having an arc-shaped outside surface in which the brush bristles are implanted, the brush bristles extending radially outward from the outside surface.
[20] The powder supply device according to any one of [1] to [19], including a rotating device configured to rotate the suction meter.
[21] The powder supply device according to any one of [1] to [20], including: a powder tank table on which the powder tank is placed; and a rotating device configured to rotate the powder tank table.
[22] The powder supply device according to any one of [1] to [21], including: a powder tank table on which the powder tank is placed; and a vibrating device configured to vibrate the powder tank table.
[23] The powder supply device according to any one of [12] to [15], including a rotating device configured to rotate the cover member.
[24] The powder supply device according to any one of [12] to [15] and [23], including a vibrating device configured to vibrate the cover member.
[25] The powder supply device according to any one of [1] to [24], wherein the suction meter is a tip that is disposable, and the tip is detachably attached to the nozzle.
[26] The powder supply device according to any one of [1] to [25], wherein the suction meter is directly or indirectly connected to a distal end portion of a flexible pipe that deforms following movement of the suction meter.
[27] The powder supply device according to any one of [1] to [26], wherein the powder supply device is a desktop type.
[28] A powder removing brush for removing surplus powder adhering to a suction meter of a powder supply device including: the suction meter having a metering chamber bounded by a filter and a suction port provided at a distal end; a nozzle configured to apply negative pressure to the metering chamber; a relative movement robot configured to move the suction meter and the powder removing brush relative to each other; and a control device configured to control operation of the relative movement robot, the powder supply device being configured to bury the distal end of the suction meter in powder within a powder tank and suck the powder into the metering chamber, the powder removing brush including: brush bristles extending in a direction intersecting with a vertical direction; and a bristle implanted member in which the brush bristles are implanted.
[29] The powder removing brush according to [28], wherein the bristle implanted member includes a first bristle implanted member and a second bristle implanted member that is disposed so as to face the first bristle implanted member.
[30] The powder removing brush according to [29], wherein, in the first bristle implanted member, a great number of the brush bristles are implanted so as to extend in a horizontal direction in a distal end portion and at least a part of a portion between the distal end portion and a base portion, and in the second bristle implanted member, a great number of the brush bristles are implanted so as to extend in the horizontal direction in a distal end portion and at least a part of a portion between the distal end portion and a base portion.
[31] The powder removing brush according to [30], wherein, in each of the first and second bristle implanted members, the brush bristles are implanted so as to extend obliquely upward or downward in the base portion.
[32] The powder removing brush according to [29] or [30], further including: a first brush bristle guide member that guides a portion between the distal end portion and the base portion of the brush bristles of the first bristle implanted member from below; and a second brush bristle guide member that guides a portion between the distal end portion and the base portion of the brush bristles of the second bristle implanted member from below.
[33] The powder removing brush according to any one of [29] to [32], further including: a third brush bristle guide member that guides a portion between the distal end portion and the base portion of the brush bristles of the first bristle implanted member from above; and a fourth brush bristle guide member that guides a portion between the distal end portion and the base portion of the brush bristles of the second bristle implanted member from above.
[34] The powder removing brush according to any one of [28] to [33], wherein the brush bristles are conductive-material bristles that neutralize static electricity on the suction meter by contact with the suction meter, and the bristle implanted member is a conductive member connected with a ground wire.
[35] A powder supply device including: a suction meter having a metering chamber bounded by a filter and a suction port provided at a distal end; a nozzle configured to be moved in a relative manner by a relative movement robot and configured to apply negative pressure to the metering chamber; and the powder removing brush according to any one of [28] to [34], wherein the powder supply device is configured to bury the distal end of the suction meter in powder within a powder tank and suck the powder into the metering chamber, wherein, after sucking the powder, the powder supply device is configured to remove surplus powder adhering to the suction meter by moving the suction meter and the brush bristles relative to each other while elastically deforming the brush bristles.
   A powder supply method according to the present invention includes the following technical means.
[36] A powder supply method using a powder supply device including: a suction meter having a metering chamber bounded by a filter and a suction port provided at a distal end; a nozzle configured to apply negative pressure to the metering chamber; a powder removing brush having brush bristles extending in a direction intersecting with a vertical direction; a relative movement robot configured to move the suction meter and the powder removing brush relative to each other; and a control device configured to control operation of the relative movement robot, the powder supply method including: a filling step of burying, by the relative movement robot, the distal end of the suction meter in powder within a powder tank and sucking the powder into the metering chamber; a powder removing step of removing surplus powder adhering to the suction meter by the relative movement robot bringing the brush bristles into contact with the suction meter and moving the suction meter and the brush bristles relative to each other while elastically deforming the brush bristles; and a discharging step of moving, by the relative movement robot, the suction meter to a predetermined position in a relative manner and discharging the powder in the metering chamber.
[37] The powder supply method according to [36], wherein the powder removing step includes an outer-peripheral-surface removing step of removing surplus powder adhering to an outer peripheral surface of the suction meter and a distal-end removing step of removing surplus powder adhering to the distal end of the suction meter.
[38] The powder supply method according to [37], wherein the brush bristles have a layered bristle structure in which brush bristle layers are stacked in an up-and-down direction, the powder supply method includes a positioning step of raising the suction meter such that the distal end of the suction meter is located above a lower end of a lowermost brush bristle layer of the layered bristle structure and below a lower end of an uppermost brush bristle layer, the positioning step being carried out immediately after the filling step, and in the powder removing step, the outer-peripheral-surface removing step and the distal-end removing step are concurrently executed by moving the suction meter in one direction.
[39] The powder supply method according to [37] or [38], wherein the outer-peripheral-surface removing step includes removing surplus powder by the brush bristles sliding on the outer peripheral surface of the suction meter due to restoring force of the elastically deformed brush bristles.
[40] The powder supply method according to any one of [36] to [39], wherein the powder removing brush includes a first powder removing brush and a second powder removing brush disposed with its bristle ends facing brush bristles of the first powder removing brush, and the powder removing step includes a first powder removing step of removing, by the first powder removing brush, surplus powder on a half peripheral surface of the suction meter and a second powder removing step of removing, by the second powder removing brush, surplus powder on the other half peripheral surface of the suction meter.
[41] The powder supply method according to [40], wherein a supporter is provided to support the first powder removing brush and the second powder removing brush in a positional relationship in which the brush bristles of the first powder removing brush and the second powder removing brush are in contact or overlap with each other, wherein, in the powder removing step, the first powder removing step and the second powder removing step are concurrently executed by moving the suction meter in one direction.
[42] The powder supply method according to any one of [36] to [41], wherein the powder removing brush includes a bristle implanted member having an arc-shaped side surface in which the brush bristles are implanted, the brush bristles extending toward a center, wherein, the powder removing step is executed by moving the suction meter along an arc-shaped trajectory.
[43] The powder supply method according to any one of [36] to [41], wherein the powder removing brush includes a bristle implanted member having an arc-shaped outside surface in which the brush bristles are implanted, the brush bristles extending radially outward from the outside surface, wherein, the powder removing step is executed by moving the suction meter along an arc-shaped trajectory.
[44] The powder supply method according to any one of [36] to [43], wherein the powder removing step is performed while rotating the suction meter and the powder removing brush relative to each other.
[45] The powder supply method according to any one of [36] to [44], wherein the filling step is performed while vibrating the powder tank.

### Advantageous Effect of the Invention

According to the present invention, it is possible to provide a powder supply device and a powder supply method which can remove surplus powder adhering to a suction meter having a metering chamber and a suction port through a simple process.

### Brief Description of the Drawings

[Fig. 1] Fig. 1 is a side view illustrating a powder metering device of an embodiment example.
[Fig. 2] Fig. 2 is a partial transparent side view illustrating a state in which a distal end portion of a tip attached to the powder metering device of an embodiment example is buried in powder within a powder tank.
[Fig. 3] Fig. 3 is a partial transparent side view illustrating a state in which the powder is sucked to fill a metering chamber of the powder metering device after the state of Fig. 2.
[Fig. 4] Fig. 4 is a partial transparent side view illustrating a state in which the tip of the powder metering device is raised from the powder tank after the state of Fig. 3.
[Fig. 5] Fig. 5 (a) is a perspective view illustrating a mode in which a powder removing brush removes surplus powder on a lateral peripheral surface of a tip, and (b) is a side view of what is illustrated by (a).
[Fig. 6] Fig. 6 shows plan views illustrating a usage mode of a powder removing brush, where (a) illustrates a state in which the powder removing brush is located at a first position, (b) illustrates a state in which the powder removing brush is located at a second position, (c) illustrates a state in which the powder removing brush is located at a third position, and (d) illustrates a state in which the powder removing brush is located at a fourth position.
[Fig. 7] Fig. 7 (a) is a perspective view illustrating a mode in which a powder removing brush removes surplus powder on a distal end of a tip, and (b) is a side view of what is illustrated by (a).

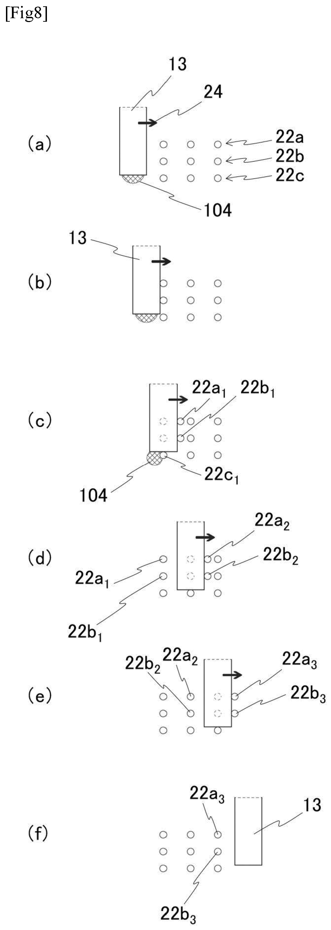

[Fig. 8] Fig. 8 shows side views illustrating a usage mode of a powder removing brush, where (a) illustrates a state in which the powder removing brush is located at a position 'a', (b) illustrates a state in which the powder removing brush is located at a position 'b', (c) illustrates a state in which the powder removing brush is located at a position 'c', (d) illustrates a state in which the powder removing brush is located at a position 'd', (e) illustrates a state in which the powder removing brush is located at a position 'e', and (f) illustrates a state in which the powder removing brush is located at a position 'f'.
[Fig. 9] Fig. 9 is a plan view illustrating first and second powder removing brushes and movement paths of a tip.
[Fig. 10] Fig. 10 (a) is a plan view illustrating how a tip moves from a position of circled number 1 to a position of circled number 2, (b) is a plan view illustrating how the tip moves from the position of circled number 2 to a position of circled number 3, (c) is a plan view illustrating how the tip moves from a position of circled number 4 to a position of circled number 5, and (d) is a plan view illustrating how the tip moves from the position of circled number 5 to a position of circled number 6.
[Fig. 11] Fig. 11 is a plan view illustrating first and third powder removing brushes and movement paths of a tip according to a first variation.

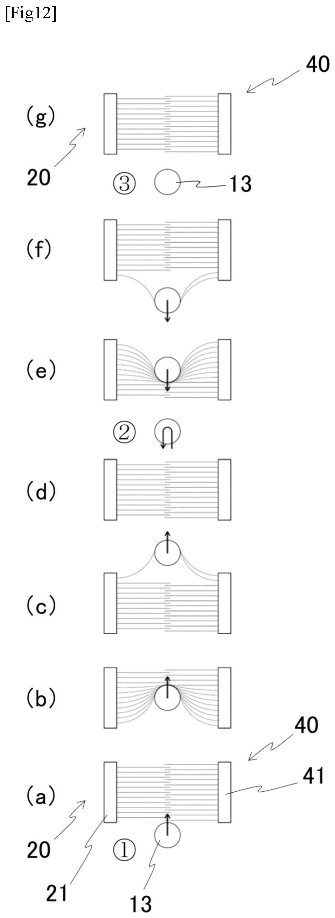

[Fig. 12] Fig. 12 shows side views illustrating a positional relationship between a tip and powder removing brushes, where (a) illustrates a state in which the tip is located at a position 'a', (b) illustrates a state in which the tip is located at a position 'b', (c) illustrates a state in which the tip is located at a position 'c', (d) illustrates a state in which the tip is located at a position 'd', (e) illustrates a state in which the tip is located at a position 'e', (f) illustrates a state in which the tip is located at a position 'f', and (g) illustrates a state in which the tip is located at a position 'g'.
[Fig. 13] Fig. 13 (a) is a plan view illustrating a fourth powder removing brush according to a second variation, and (b) is a plan view illustrating a fifth powder removing brush according to a third variation.
[Fig. 14] Fig. 14 is a side view of a powder tank cover member according to an embodiment example.
[Fig. 15] Fig. 15 is a side view of a powder tank cover member with an electrostatic neutralization function according to an embodiment example.
[Fig. 16] Fig. 16 is a side view of a powder tank cover member with a layered bristle structure according to an embodiment example.
[Fig. 17] Fig. 17 (a) is a side view of an attachment-type powder tank cover member according to an embodiment example, and (b) is a side view of a self-supporting-type powder tank cover member according to an embodiment example.

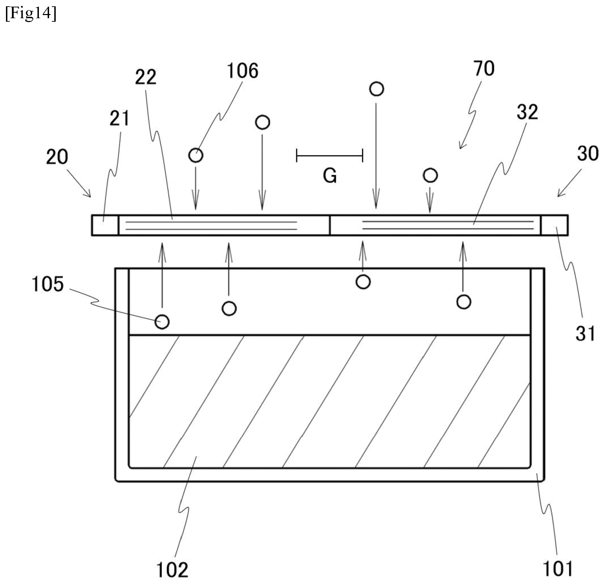

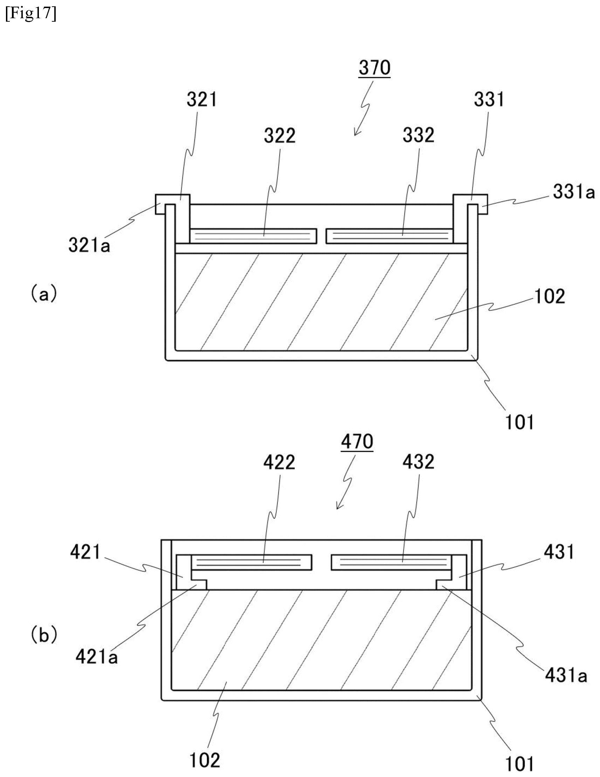

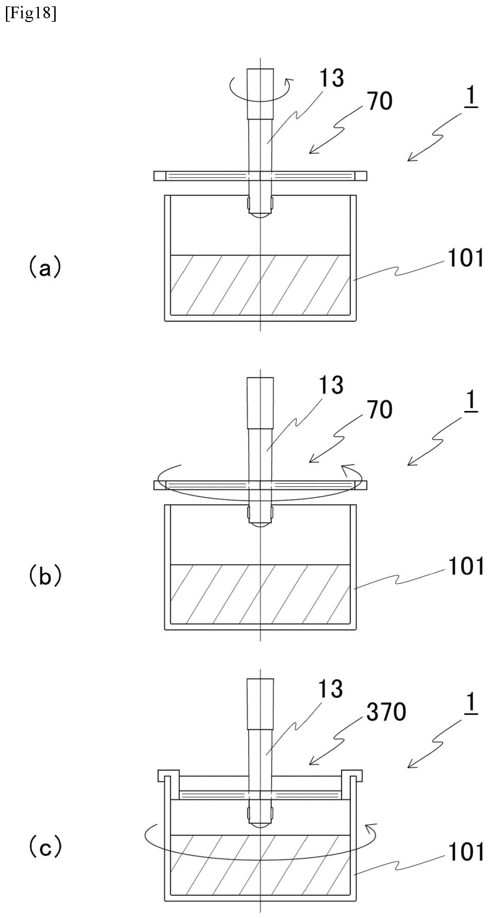

[Fig. 18] Fig. 18 (a) is a side view illustrating a configuration in which a tip rotating device that rotates a powder metering device around a rotation axis along a vertical direction is provided in a powder supply device of Fig. 14, (b) is a side view illustrating a configuration in which a cover member rotating device that rotates a powder tank cover member around a rotation axis along the vertical direction is provided in the powder supply device of Fig. 14, and (c) is a side view illustrating a configuration in which a rotating device that rotates a powder tank around a rotation axis along the vertical direction is provided in a powder supply device of Fig. 17 (a).
[Fig. 19] Fig. 19 (a) is a perspective view illustrating a powder removing brush and a sucking device, (b) is a side view of what is illustrated by (a), and (c) is a side view illustrating a tenth powder removing brush of which bristle implanted member is provided with a sucking port.
[Fig. 20] Fig. 20 (a) is a side view illustrating eleventh and twelfth powder removing brushes, and (b) is a side view illustrating thirteenth and fourteenth powder removing brushes.
[Fig. 21] Fig. 21 (a) is a side view illustrating fifteenth and sixteenth powder removing brushes and first and second brush guide members, (b) is a side view illustrating seventeenth and eighteenth powder removing brushes and first and second brush guide members, and (c) is a side view illustrating first and second powder removing brushes and first to fourth brush guide members.
[Fig. 22] Fig. 22 is a perspective view of a desktop-type powder supply device according to Example 1.
[Fig. 23] Fig. 23 is a perspective view of a brush device and a vibrating device according to Example 1.
[Fig. 24] Fig. 24 is a side view of a powder metering device according to Example 2.
[Fig. 25] Fig. 25 is a perspective view of a powder supply device according to Example 2.

### Mode for Carrying out the Invention

Embodiment examples of the present invention will be described below.

A powder supply device 1 according to an embodiment example includes a powder metering device 10 and powder removing brushes (20, 30).

### <Powder Metering Device 10>

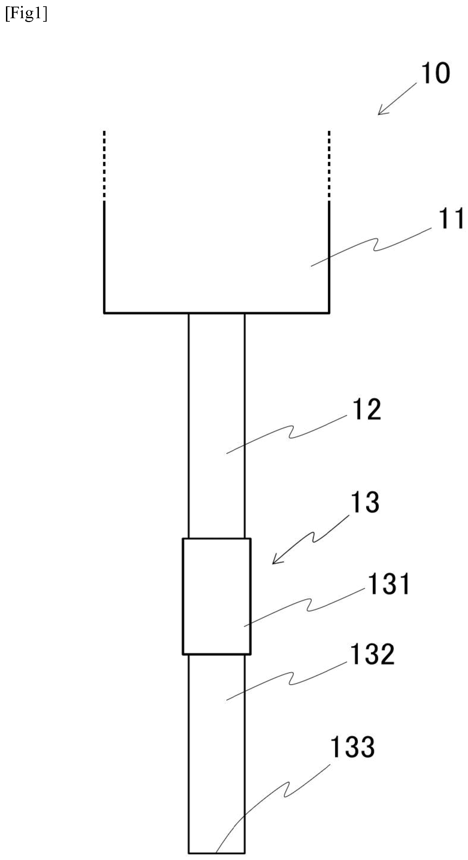

Fig. 1 is a side view illustrating a powder metering device 10. The powder metering device 10, which is also referred to as a pipette for powder, mainly includes: a main body 11; a nozzle 12 extending from a lower end of the main body 11; and a tip (suction meter) 13 attached to a distal end of the nozzle 12.

The main body 11 can apply negative pressure to the internal space of the nozzle 12 by an external or internal negative pressure source (not illustrated). The tip 13 is detachably attached to the distal end of the cylindrical nozzle 12. The tip 13 includes an attachment portion 131 in which the nozzle 12 is inserted, and a suction portion 132 that extends downward from the attachment portion 131 and has a smaller diameter than the attachment portion 131. The suction portion 132 of the tip 13 has a lower end that is provided with a suction port 133 opening downward. The tip 13, which is a publicly known tip, is formed of resin material and is generally disposable. The shape of the tip 13 is not limited to the illustrated cylindrical shape, and a tip of any shape such as a tapered shape can be used. The tip 13 is herein sometimes referred to as suction meter. Note that the tip is not necessarily made of resin, and may be made of metal such as aluminum or stainless steel, glass, or paper.

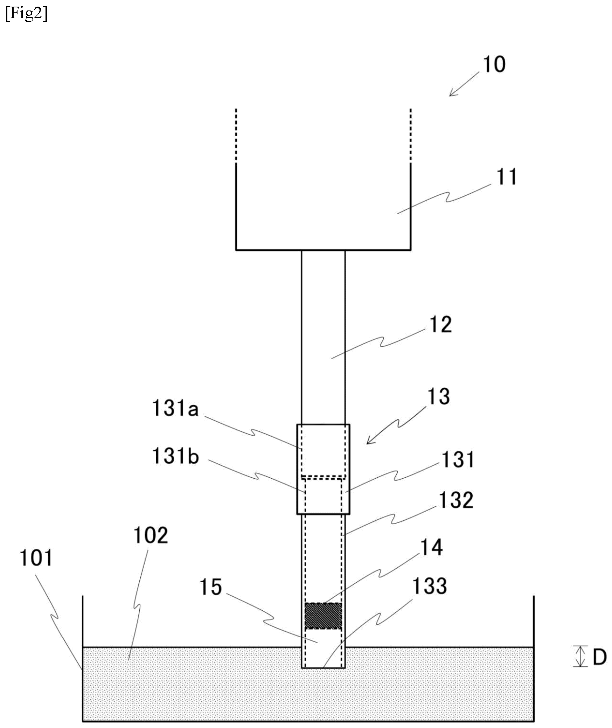

The powder metering device 10 according to the present embodiment example is used for sucking a desired amount of powder by inserting the lower end of the suction portion 132 of the tip 13 into powder stored within a powder tank and for discharging the powder after moving to a predetermined position. When this work is performed, an issue of surplus powder adhering to the distal end of the tip 13 occurs. The issue of surplus powder adhering to the distal end of the tip 13 will be described below with reference to Figs. 2 to 4.

Fig. 2 is a partial transparent side view illustrating a state in which a distal end portion of a tip 13 attached to the powder metering device 10 of the embodiment example is buried in powder 102 within a powder tank 101. As illustrated in Fig. 2, in the attachment portion 131 of the tip 13, a stepped flow path composed of a large-diameter flow path 131a and a small-diameter flow path 131b is formed. The distal end of the nozzle 12 is inserted in the large-diameter flow path 131a and is fixed in contact with a stepped portion provided at an upper end of the small-diameter flow path 131b. Note that the nozzle is not necessarily fixed to the tip in contact with the stepped portion, and may be fixed thereto by a taper.

In the suction portion 132 of the tip 13, a filter 14 is disposed at a position a predetermined distance away from the suction port 133. A space in the tip 13 from the filter 14 to the suction port 133 constitutes a metering chamber 15.

When powder is sucked, a relative movement robot, not illustrated, moves the main body 11 above the powder tank 101, and then lowers the main body 11 to bury the distal end portion of the tip 13 in the powder 102 to a depth D. The powder tank 101 stores the powder 102 that is a sample or the like. The depth D can be changed depending on application.

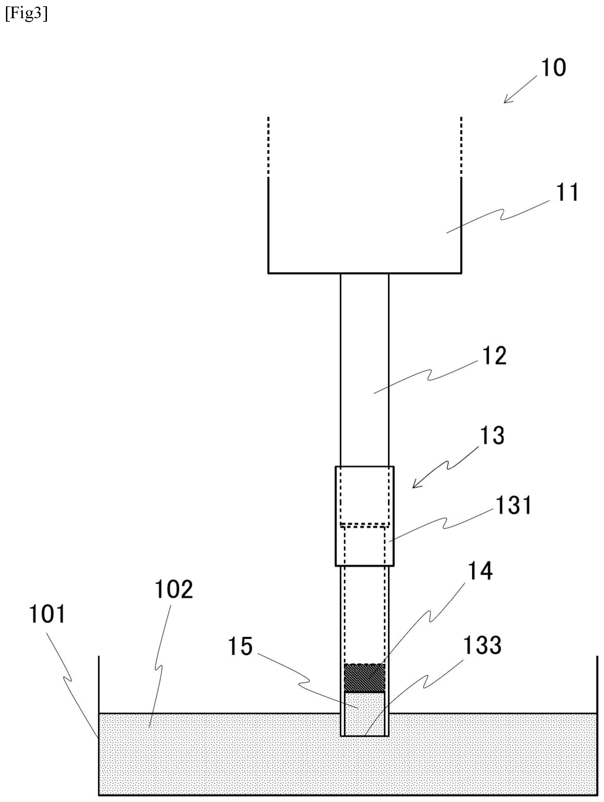

Fig. 3 is a partial transparent side view illustrating a state in which powder 102 is sucked to fill the metering chamber 15 of the powder metering device 10 after the state of Fig. 2. When powder 102 is sucked into the metering chamber 15, the main body 11 applies negative pressure from the negative pressure source such as a pump, not illustrated, to the internal space of the nozzle 12 in the state where the distal end portion of the tip 13 is buried in the powder 102 to the depth D. As a result, the negative pressure is also applied to the internal space of the tip 13 communicating with the internal space of the nozzle 12, so that powder 102 is sucked into the metering chamber 15 from the suction port 133 of the tip 13. As the filter 14 provided at the upper end of the metering chamber 15 has a fine-pore structure of which pore size allows a gas to pass through but not the powder 102, the powder 102 sucked from the suction port 133 is retained in the metering chamber 15. Note that the timing when negative pressure from the negative pressure source is applied to the nozzle 12 can be automatically controlled by a control device, not illustrated. It goes without saying that the control device can adjust the negative pressure to a desired pressure.

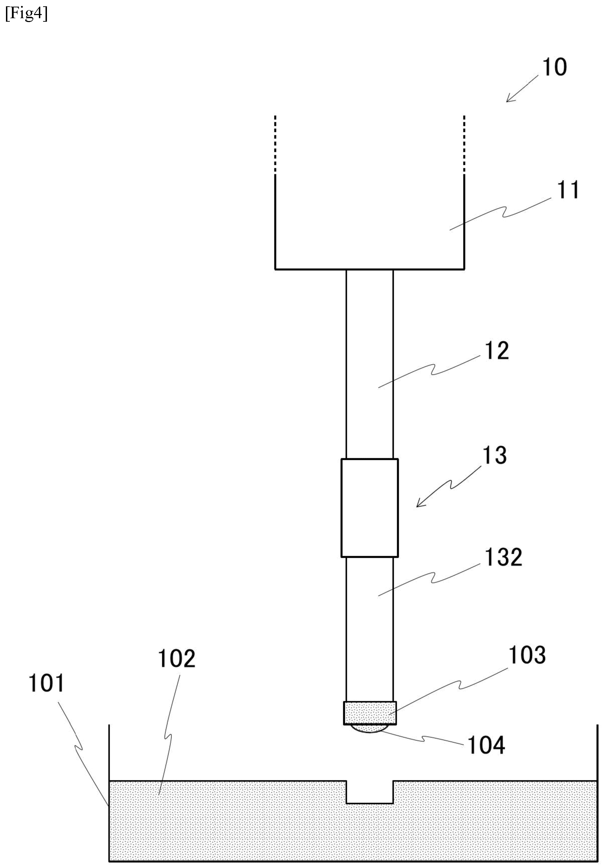

Fig. 4 is a partial transparent side view illustrating a state in which the tip 13 of the powder metering device 10 is raised from the powder tank after the state of Fig. 3. When the relative movement robot, not illustrated, raises the main body 11, surplus powder 103 is found adhering to an outer peripheral surface near the distal end of the suction portion 132 of the tip 13. In addition, surplus powder 104 held by the negative pressure also adheres to the distal end of the tip 13 to protrude from the suction port 133. If the surplus powder 103 on the outer peripheral surface of the tip 13 and the surplus powder 104 on the distal end are discharged together when the powder in the metering chamber 15 is discharged, they cause a supply amount error.

Further, as air flow or slight vibration during movement of the powder metering device 10 to a supply location causes the surplus powder 103, 104 to fall, there is a risk of contaminating a work environment with the powder. A method for removing surplus powder adhering to the outer peripheral surface and the distal end of the tip 13 will be described below.

### <First Powder Removing Brush 20>

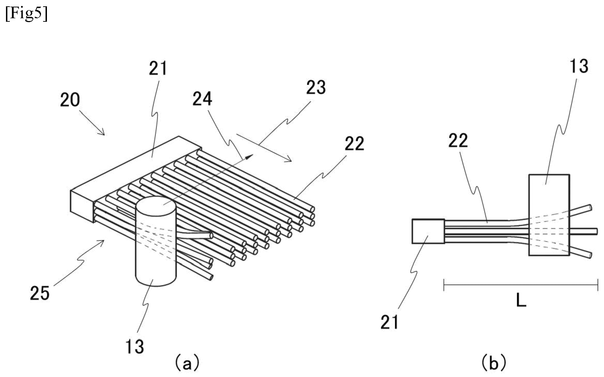

As illustrated in Fig. 5 (a) and (b), a first powder removing brush 20 includes a bristle implanted member 21 and brush bristles 22. In Fig. 5, the brush bristles 22 are drawn thicker than they actually are for convenience of explanation.

In a side surface of the bristle implanted member 21, one end of each brush bristle 22 is implanted. The brush bristles 22 are a group of elastic bristles that extend along an extending direction 23 and have the same length and the same diameter. Examples of a material that can be used for the bristles 22 include a synthetic resin bristle, a synthetic fiber, a variety of animal hairs, and a variety of plant fibers, and these materials to which conductivity is partially or fully added. Although the bristle implanted member 21 illustrated in Fig. 5 has a flat side surface in which the brush bristles 22 are implanted, the bristle implanted member 21 may have a curved arc-shaped side surface, and the brush bristles 22 may be implanted therein. Alternatively, the brush bristles 22 may be configured by combining groups of elastic bristles having different lengths and/or having different diameters.

The brush bristles 22 have three brush layers, which are an upper layer, a middle layer, and a lower layer, in which brush bristles 22 are arranged at equal intervals in a first advancing direction 24 perpendicular to the extending direction 23. In other words, the brush bristles 22 of the embodiment example have a three-stage layered bristle structure in which three brush layers are stacked in the vertical direction. Although the extending direction 23 of each brush layer is the horizontal direction in the embodiment example, each brush layer may be arranged to have an extending direction forming an angle of less than 90 degrees with respect to the horizontal direction. The layered bristle structure of the brush bristles 22 of the first powder removing brush 20 does not necessarily include three layers as illustrated, and may include two layers or four or more layers.

The first powder removing brush 20 is used by bringing a tip 13 into contact with a first side surface 25 and then moving the tip 13 along the first advancing direction 24 while elastically deforming the brush bristles 22. Fig. 5 (a) is a perspective view illustrating a mode in which the tip 13 is brought into contact with the first side surface 25 of the first powder removing brush 20 for surplus powder to be removed, and Fig. 5 (b) is a side view of what is illustrated by Fig. 5 (a). Note that the first powder removing brush 20 is used while being held by a brush holding stand, not illustrated, and the tip 13 is moved by the relative movement robot, not illustrated.

### (1) Removal of Surplus Powder 103 on Outer Peripheral Surface of Tip 13

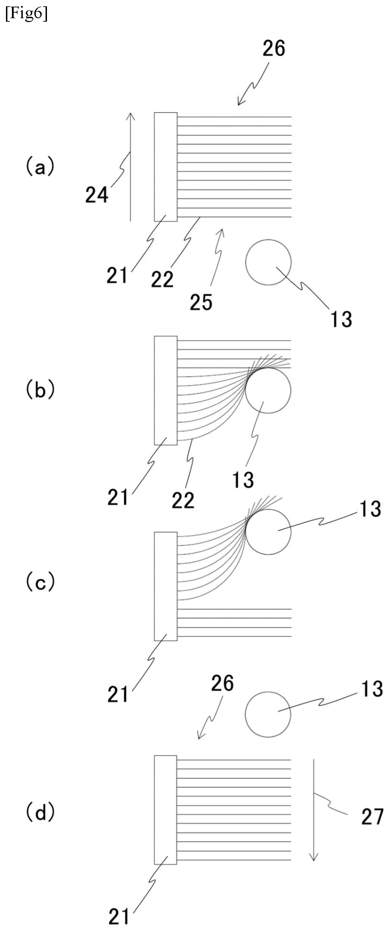

Fig. 6 shows plan views illustrating a usage mode of the first powder removing brush 20, where (a) illustrates a state in which the powder removing brush is located at a first position, (b) illustrates a state in which the powder removing brush is located at a second position, (c) illustrates a state in which the powder removing brush is located at a third position, and (d) illustrates a state in which the powder removing brush is located at a fourth position.

After sucking powder 102, the powder metering device 10 is moved to a position such that the tip 13 faces the first side surface 25 of the first powder removing brush 20 by the relative movement robot, not illustrated (see Fig. 6 (a)). Here, the horizontal position of the tip 13 relative to the first powder removing brush 20 has a positional relationship such that the tip 13 comes in contact with the brush bristles 22 at a position closer to a base side than bristle ends, not a positional relationship such that the tip 13 comes in contact with the brush bristles 22 near the bristle ends. For example, the tip 13 is located to come in contact with the brush bristles 22 within a range, with respect to a distal end of the brush bristles 22, from 3/4 to 1/8 or from 2/3 to 1/6 of the length L of the brush bristles 22.

Next, when the tip 13 is advanced along the first advancing direction 24 by the relative movement robot, not illustrated, the tip 13 comes in contact with the first side surface 25. When the tip 13 is further advanced as it is along the first advancing direction 24, brush bristles 22 that have come in contact with the tip 13 elastically deform, thereby coming in close contact with the outer peripheral surface of the tip 13 on a bristle implanted member 21 side. This results in the scraping action surplus powder 103 adhering to the outer peripheral surface of the tip 13 on the bristle implanted member 21 side (see Fig. 6 (b)).

When the tip 13 is further advanced along the first advancing direction 24, brush bristles 22 near a second side surface 26 that is opposite to the first side surface 25 also come in contact with the tip 13 and elastically deform. Meanwhile, brush bristles 22 near the first side surface 25 lose contact with the tip 13 and return to their original positions (see Fig. 6 (c)). When the tip 13 is further moved along the first advancing direction 24, all the brush bristles 22 lose contact with the tip 13 and return to their original positions (see Fig. 6 (d)). In this manner, moving the tip 13 along the first advancing direction 24 from the first side surface 25 through the second side surface 26 of the first powder removing brush 20 allows the first powder removing brush 20 to clean surplus powder 103 adhering to a half (the bristle implanted member 21 side) of the outer peripheral surface of the tip 13.

After the tip 13 is moved along the first advancing direction 24 for cleaning, it may be moved along a second advancing direction 27 that is opposite to the first advancing direction 24 so that the outer peripheral surface of the tip 13 on an opposite side (lower side in Fig. 6) will be cleaned. The scraping action by the brush bristles 22 acts on the outer peripheral surface at a side of the advancing direction with which the brush bristles 22 first come in contact more strongly than on the outer peripheral surface at a side opposite to the advancing direction. Therefore, cleaning with movement along the second advancing direction 27 can enhance the cleaning effect.

Furthermore, it is possible to remove surplus powder 103 adhering to the entire outer peripheral surface of the tip 13 by the first powder removing brush 20 cleaning the other half (a side opposite to the bristle implanted member 21) of the outer peripheral surface of the tip 13. When the tip 13 is moved along the second advancing direction 27 as described above, the main body 11 may be rotated by 180 degrees so that the outer peripheral surface of the tip 13 on an uncleaned side (the side opposite to the bristle implanted member 21) will be cleaned. In a preferred embodiment example, a second powder removing brush 30 is provided, which will be described later.

### (2) Removal of Surplus Powder 104 on Distal End of Tip 13

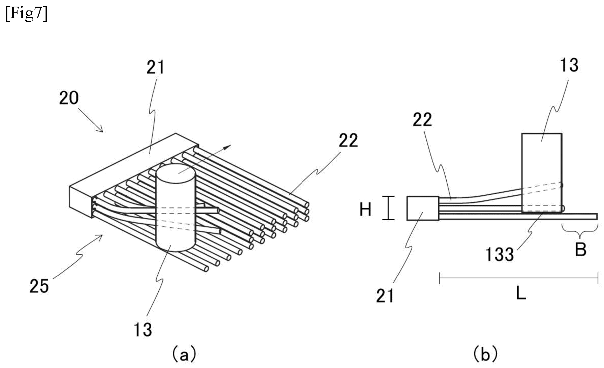

Fig. 7 (a) and (b) are views for explaining how surplus powder 104 on the distal end of the tip 13 is removed by the first powder removing brush 20. In Fig. 7, the brush bristles 22 are drawn thicker than they actually are for convenience of explanation.

Surplus powder 104 on the distal end of the tip 13 is removed by an upper surface of the brush bristles 22 of the lower layer of the first powder removing brush 20 striking off the powder adhering to a distal end surface of the tip 13. Here, the distal end of the tip 13 preferably comes in contact with the brush 20 at a vertical position within a range from a lower end of the brush bristles 22 to 2/3 of the height H of the brush bristles 22. Although it is preferable that the upper surface of the brush bristles 22 of the middle layer or lower layer of the first powder removing brush 20 comes in contact with the distal end of the tip 13, this contact is not essential. If there are brush bristles 22 that come directly below the distal end of the tip 13, surplus powder 104 protruding from the distal end of the tip 13 can be removed.

In a case where only the brush bristles 22 of the lower layer are located below the distal end of the tip 13, the scraping action on the lateral surface of the tip 13 is provided by the upper layer and the middle layer of the brush bristles 22. In order to effectively remove surplus powder 103 on the lateral peripheral surface of the tip 13 concurrently with removing surplus powder 104 on the distal end of the tip 13, the first powder removing brush 20 has a thickness (height H) of, for example, 5 mm to 60 mm or 10 mm to 50 mm. From another perspective, the height H of the first powder removing brush 20 is preferably greater than the depth D to which the tip 13 is buried in the powder 102 (see Fig. 2). When the relationship "height H > depth D" is satisfied, it is possible to remove surplus powder 103 on the lateral peripheral surface of the tip 13 concurrently with removing surplus powder 104 on the distal end of the tip 13. Since the depth D changes depending on application, it is preferable to set the thickness (height H) of the first powder removing brush 20 so as to accommodate various applications.

In a case where the height H is equal to or less than the depth D, the tip 13 is moved relative to the first powder removing brush 20 for removing surplus powder 103 on an upper portion of the lateral peripheral surface of the tip 13, and then the tip 13 is moved relative to the first powder removing brush 20 again for removing surplus powder 103 on a lower portion of the lateral peripheral surface of the tip 13 and surplus powder 104. As such, the effect of the present invention can be achieved.

Further, it is preferable to place the tip 13 at a position on the base side that is a buffer distance B away from the distal end of the brush bristles 22, thereby preventing the distal end of the brush bristles 22 from entering the suction port 133 and scraping out powder in the metering chamber 15 (see Fig. 7 (b)). For example, the tip 13 is placed to come in contact with the brush bristles 22 within a range, with respect to the distal end of the brush bristles 22, from 3/4 to 1/8 or from 2/3 to 1/6 of the length L of the brush bristles 22.

Fig. 8 (a) to (f) are side views from the distal end side of the brush bristles 22 illustrating states in which the first powder removing brush 20 is located at respective positions 'a' to 'f'. In Fig. 8 (a), the upper layer, the middle layer, and the lower layer of the brush 22 are indicated by reference symbols 22a, 22b, and 22c, respectively.

As illustrated in Fig. 8 (a), when the tip 13 is at the position 'a', the lower end of the tip 13 is located between the middle layer 22b and the lower layer 22c in the vertical direction.

As illustrated in Fig. 8 (b), when the tip 13 advances from the position 'a' in the first advancing direction 24 to reach the position 'b', a side surface of the tip 13 comes in contact with a brush bristle 22a of the upper layer and a brush bristle 22b of the middle layer.

As illustrated in Fig. 8 (c), when the tip 13 advances from the position 'b' in the first advancing direction 24 to reach the position 'c', a brush bristle 22a₁ of the upper layer and a brush bristle 22b₁ of the middle layer that constitute the first side surface 25 elastically deform due to pressing force of the tip 13 and a brush bristle 22c₁ of the lower layer strikes off surplus powder 104 protruding from the distal end of the tip 13. At this time, the distal end of the tip 13 in some cases comes in contact with the brush bristle 22c of the lower layer and in some cases does not so. Moreover, in some cases, surplus powder 104 protruding from the distal end of the tip 13 is struck off by the brush bristle 22b of the middle layer that has deformed in such a manner that it slips under the distal end of the tip 13.

As illustrated in Fig. 8 (d), when the tip 13 advances from the position 'c' in the first advancing direction 24 to reach the position 'd', the brush bristle 22a₁ of the upper layer and the brush bristle 22b₁ of the middle layer that constitute the first side surface 25 lose contact with the tip 13 and return to their original positions. A brush bristle 22a₂ of the upper layer and a brush bristle 22b₂ of the middle layer that are adjacent to the brush bristle 22a₁ of the upper layer and the brush bristle 22b₁ of the middle layer elastically deform due to pressing force of the tip 13.

As illustrated in Fig. 8 (e), when the tip 13 advances from the position 'd' in the first advancing direction 24 to reach the position 'e', the brush bristle 22a₂ of the upper layer and the brush bristle 22b₂ of the middle layer lose contact with the tip 13 and return to their original positions. A brush bristle 22a₃ of the upper layer and a brush bristle 22b₃ of the middle layer that are adjacent to the brush bristle 22a₂ of the upper layer and the brush bristle 22b₂ of the middle layer elastically deform due to pressing force of the tip 13.

As illustrated in Fig. 8 (f), when the tip 13 advances from the position 'e' in the first advancing direction 24 to reach the position 'f', the brush bristle 22a₃ of the upper layer and the brush bristle 22b₃ of the middle layer lose contact with the tip 13 and return to their original positions.

As described above, as a result of the tip 13 moving from the position 'a' to the position 'f', surplus powder 103 on the lateral peripheral surface of the tip 13 and surplus powder 104 protruding from the distal end are removed by the first powder removing brush 20.

### <Second Powder Removing Brush 30>

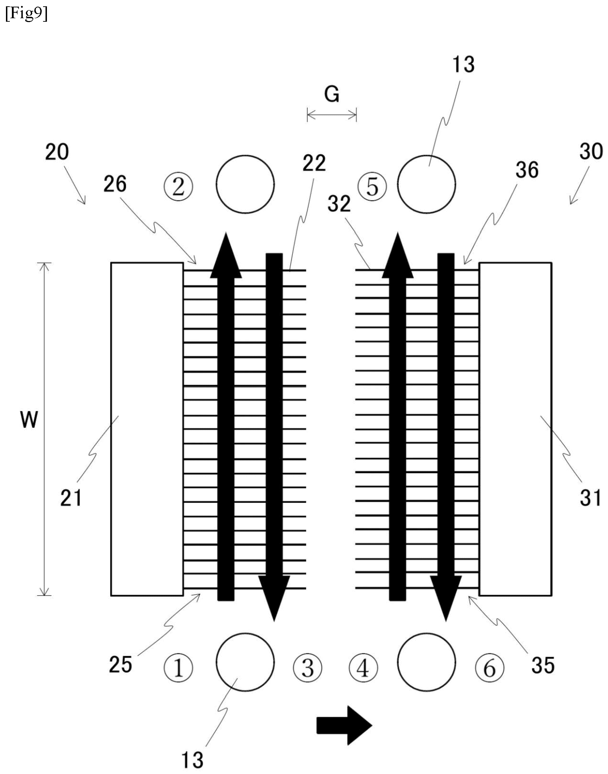

As illustrated in Fig. 9, a second powder removing brush 30 is provided to face a first powder removing brush 20 in a preferred embodiment example. The second powder removing brush 30, which has the same configuration as the first powder removing brush 20, includes a bristle implanted member 31 and brush bristles 32.

The second powder removing brush 30 is disposed such that the bristle ends thereof and the bristle ends of the first powder removing brush 20 face each other. A gap G is provided between the first powder removing brush 20 and the second powder removing brush 30. Although Fig. 9 illustrates the bristle implanted member 21 and the bristle implanted member 31 as separate members, they may be formed as an integrated member. Further, side surfaces of the first powder removing brush 20 and the second powder removing brush 30 in which the brush bristles 22, 32 are implanted may be curved, instead of being flat. Further, the first powder removing brush 20 and the second powder removing brush 30 are not necessarily disposed in a parallel positional relationship, and may be disposed in a relationship in which their extended lines intersect at an acute angle (for example, less than 45 degrees). The bristle implanted members 21, 31 may be integrally formed as a bristle implanted member having, for example, a 'C' shape, 'V' shape, or ']' shape (half-bracket shape).

A tip 13 is moved along a path following circled numbers 1 to 6 shown in Fig. 9 in order.

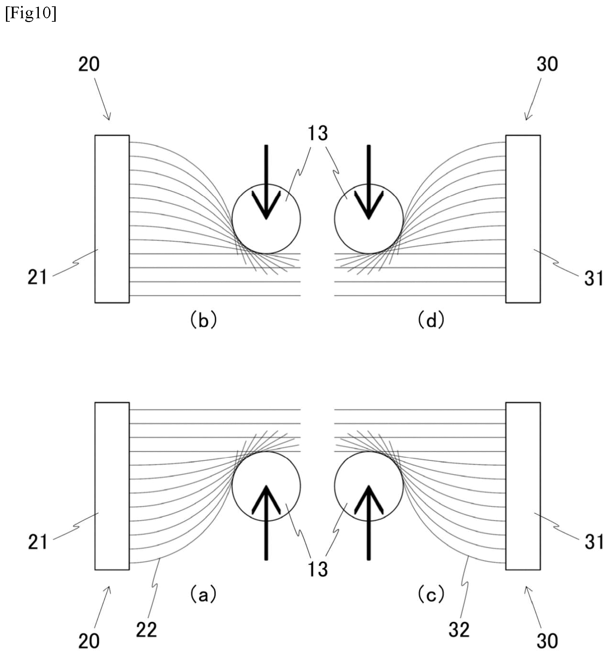

First, the tip 13 moves from a position indicated by the circled number 1 to a position indicated by the circled number 2 along a width direction W of the brush 21, so that surplus powder 103 adhering to a left half peripheral surface and surplus powder 104 protruding from the distal end are removed. Fig. 10 (a) illustrates the tip 13 currently moving from the position of the circled number 1 to the position of the circled number 2.

Next, the tip 13 moves back from the position indicated by the circled number 2 to a position indicated by the circled number 3, so that surplus powder 103 adhering to the left half peripheral surface and surplus powder 104 protruding from the distal end are removed. Fig. 10 (b) illustrates the tip 13 currently moving from the position of the circled number 2 to the position of the circled number 3. Note that a movement path from the position of the circled number 2 to the position of the circled number 3 may be the same as a movement path from the position of the circled number 1 to the position of the circled number 2.

By this back-and-forth movement following the circled numbers 1 to 3 across the brush bristles 22, surplus powder 103 adhering to the left half peripheral surface of the tip 13 and surplus powder 104 protruding from the distal end are removed.

Next, the tip 13 moves from the position indicated by the circled number 3 to a position indicated by the circled number 4, and an operation to mainly remove surplus powder 103 adhering to a right half peripheral surface by the second powder removing brush 30 is performed.

First, the tip 13 moves from the position indicated by the circled number 4 to a position indicated by the circled number 5, so that surplus powder 103 adhering to the right half peripheral surface and surplus powder 104 remaining to be removed on the distal end are removed. Fig. 10 (c) illustrates the tip 13 currently moving from the position of the circled number 4 to the position of the circled number 5.

Next, the tip 13 moves back from the position indicated by the circled number 5 to a position indicated by the circled number 6, so that surplus powder 103 adhering to the left half peripheral surface and surplus powder 104 remaining to be removed on the distal end are removed. Fig. 10 (d) illustrates the tip 13 currently moving from the position of the circled number 5 to the position of the circled number 6. Note that a movement path from the position of the circled number 5 to the position of the circled number 6 may be the same as a movement path from the position of the circled number 4 to the position of the circled number 5.

By this back-and-forth movement following the circled numbers 4 to 6 across the brush bristles 32, surplus powder 103 adhering to the right half peripheral surface of the tip 13 and surplus powder 104 on the distal end that has not been removed by the first powder removing brush 20 are removed.

As described above, according to the preferred embodiment example, surplus powder 103 on the entire peripheral surface of the tip 13 can be reliably removed by the first powder removing brush 20 and the second powder removing brush 30. In Fig. 9, as indicated by the circled numbers 2 and 5, the tip 13 is moved to the positions to completely lose contact with the brush bristles 22, 32 of the brushes 20, 30. However, even when the tip 13 starts moving back without losing contact with the brush bristles 22, 32, it is possible to achieve a sufficient effect of removing surplus powder.

### <Third Powder Removing Brush 40>

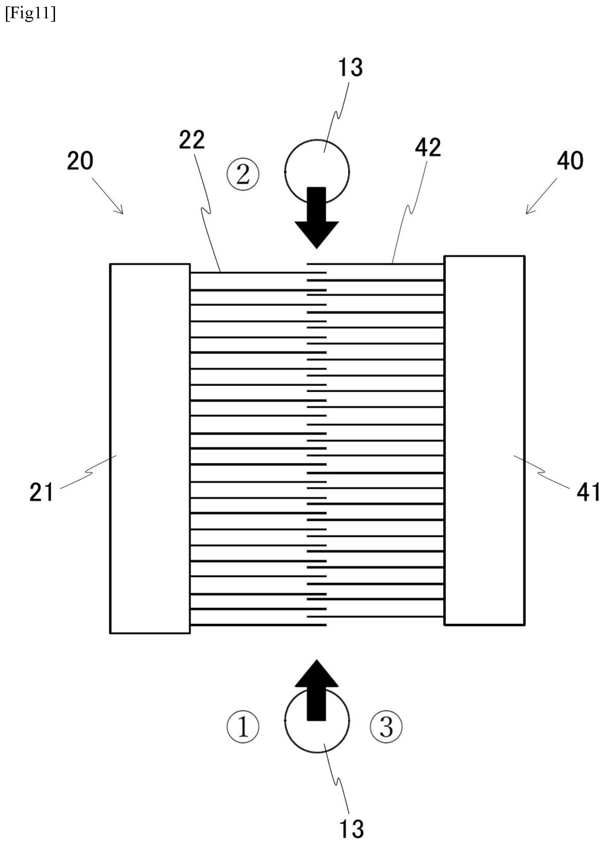

As illustrated in Fig. 11, in an embodiment example according to a first variation, a third powder removing brush 40 is provided to face a first powder removing brush 20. The third powder removing brush 40, which has the same configuration as the first powder removing brush 20, includes a bristle implanted member 41 and brush bristles 42.

The third powder removing brush 40 is disposed such that the bristle ends thereof and the bristle ends of the first powder removing brush 20 face each other. In addition, the first powder removing brush 20 and the third powder removing brush 40 are disposed such that the respective bristle ends overlap with each other.

A tip 13 is moved along a path following circled numbers 1 to 3 shown in Fig. 12 in order.

First, the tip 13 moves from a position indicated by the circled number 1 to a position indicated by the circled number 2, so that surplus powder 103 adhering to the entire peripheral surface and surplus powder 104 protruding from the distal end are removed. Fig. 12 (a) to (d) illustrate the tip 13 currently moving from the position of the circled number 1 to the position of the circled number 2.

Next, the tip 13 moves back from the position indicated by the circled number 2 to a position indicated by the circled number 3, so that surplus powder 103 remaining to be removed and adhering to the entire peripheral surface and surplus powder 104 remaining to be removed and protruding from the distal end are removed. Fig. 12 (d) to (g) illustrate the tip 13 currently moving from the position of the circled number 2 to the position of the circled number 3. Note that a movement path from the position of the circled number 2 to the position of the circled number 3 may be the same as a movement path from the position of the circled number 1 to the position of the circled number 2.

By this back-and-forth movement following the circled numbers 1 to 3 across the brush bristles 22, 42, surplus powder 103 adhering to the entire peripheral surface of the tip 13 and surplus powder 104 protruding from the distal end are removed.

As described above, according to the first variation, surplus powder 103 on the entire peripheral surface of the tip 13 can be removed by the first powder removing brush 20 and the third powder removing brush 40 with a shorter movement distance of the tip 13 than in Fig. 9 (that is, one-round movement), and therefore it is possible to shorten cleaning time for the tip 13. In Figs. 11 and 12, as indicated by the circled number 2, the tip 13 is moved to the position to completely lose contact with the brush bristles 22, 42 of the brushes 20, 40. However, even when the tip 13 starts moving back without losing contact with the brush bristles 22, 42, it is possible to achieve a sufficient effect of removing surplus powder.

### <Powder Removing Brush 50>

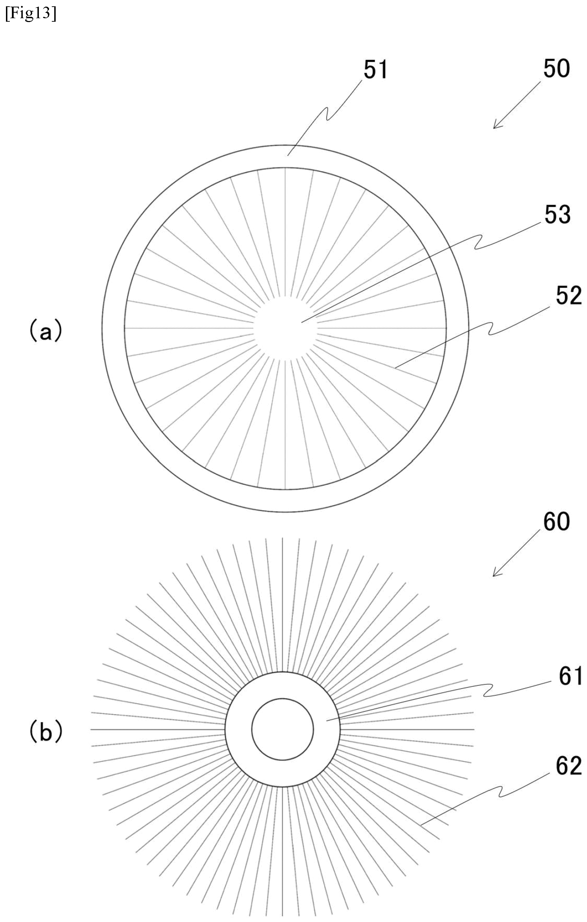

As illustrated in Fig. 13 (a), in an embodiment example according to a second variation, a fourth powder removing brush 50 is provided. The fourth powder removing brush 50 includes an annular bristle implanted member 51 and brush bristles 52.

The annular bristle implanted member 51 has an inner peripheral surface in which the brush bristles 52 extending toward the center are implanted. The brush bristles 52 have a length such that a center hole 53 can be formed at the center of the powder removing brush 50. Although the bristle implanted member 51 is a single annular member in the example of Fig. 13 (a), the bristle implanted member 51 may include a plurality of bristle implanted members having arc-shaped inner peripheral surfaces in which brush bristles 52 are implanted.

When surplus powder 103 on the lateral peripheral surface of a tip 13 and surplus powder 104 on the distal end are removed, first, the tip 13 is inserted into the center hole 53 and the position of the tip 13 in a height direction is adjusted. This position adjustment in the height direction is similar to the example of Fig. 7 described above. Note that the position of the tip 13 in the height direction may be adjusted with the tip 13 inserted at a position closer to a base side than a distal end of the brush 52, instead of the tip 13 being inserted at the center hole 53. Next, the tip 13 is moved to a position closer to the base side than the distal end of the brush bristles 52 and moved in a circular motion clockwise or counterclockwise, so that surplus powder 103 on the lateral peripheral surface of the tip 13 and surplus powder 104 on the distal end can be removed.

### <Powder Removing Brush 60>

As illustrated in Fig. 13 (b), in an embodiment example according to a third variation, a fifth powder removing brush 60 is provided. The fifth powder removing brush 60 includes an annular bristle implanted member 61 and brush bristles 62.

The annular bristle implanted member 61 has an outer peripheral surface in which the brush bristles 62 extending radially are implanted. Here, the bristle implanted member 61 may be a disk-shaped or columnar member.

When surplus powder 103 on the lateral peripheral surface of a tip 13 and surplus powder 104 on the distal end are removed, first, the position of the tip 13 in the height direction is adjusted. This position adjustment in the height direction is similar to the example of Fig. 7 described above. Next, the tip 13 is moved to a position closer to a base side than a distal end of the brush bristles 62 and moved in a circular motion clockwise or counterclockwise, so that surplus powder 103 on the lateral peripheral surface of the tip 13 and surplus powder 104 on the distal end can be removed. Note that the position adjustment of the tip 13 in the height direction may be performed after the tip 13 is moved to the position closer to the base side than the distal end of the brush bristles 62.

### <Powder Tank Cover Member 70>

In a preferred embodiment example, a first powder removing brush 20 and a second powder removing brush 30, which have been described with reference to Figs. 9 and 10, constitute a powder tank cover member 70.

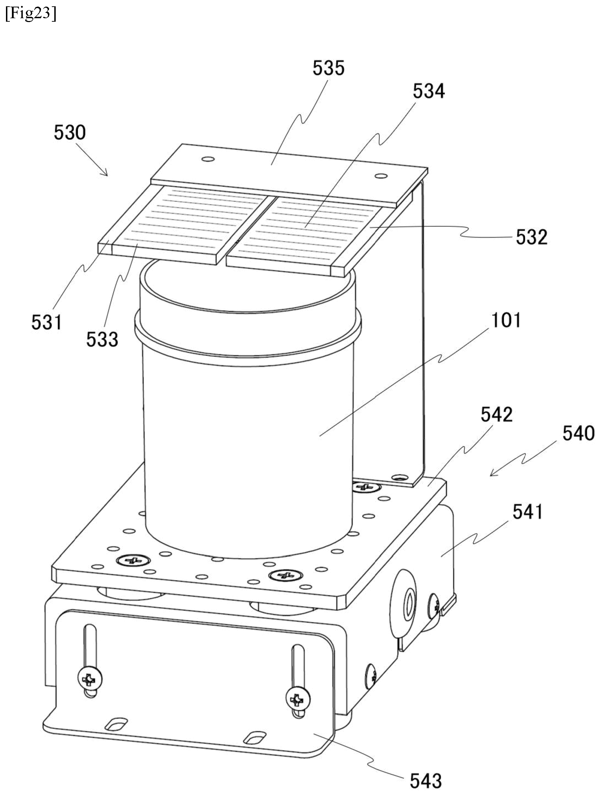

As illustrated in Fig. 14, the first powder removing brush 20 and the second powder removing brush 30 are disposed with a supporter, not illustrated, above the powder tank 101 to constitute the powder tank cover member 70 (see Fig. 23 described later). The width W (see Fig. 9) of the first powder removing brush 20 and the second powder removing brush 30 spans an area that can cover whole or part of the powder tank 101.

When the powder metering device 10 sucks powder 102, a tip 13 enters a gap G between the first powder removing brush 20 and the second powder removing brush 30 or enters the brush bristles 22, 32. Surplus powder 103, 104 that has adhered to the tip 13 in powder suction work is removed by movement of the tip 13 relative to the first powder removing brush 20 and the second powder removing brush 30, and falls into the powder tank 101. Since the first powder removing brush 20 and the second powder removing brush 30 are disposed directly above the powder tank 101, a movement distance of the powder metering device 10 necessary for removing surplus powder 103, 104 is minimum.

The powder tank cover member 70 described above exerts an action of preventing flying powder 105 within the powder tank 101 from scattering outside. It also exerts an action of preventing outside dust 106 from getting into the powder tank 101. Note that a vibrating device that applies vibration to the powder tank cover member 70 may be provided to vibrate the powder tank cover member 70 during removal of surplus powder 103, 104. Further, vibration from this vibrating device may be transmitted to vibrate the powder tank 101.

### <Powder Tank Cover Member 170 with Electrostatic Neutralization Function>

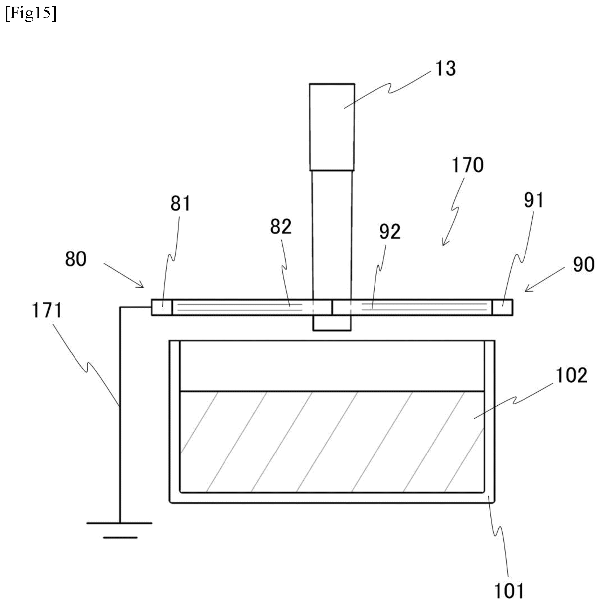

Fig. 15 is a side view of a powder tank cover member 170 with an electrostatic neutralization function. As a tip 13 is generally formed of resin material, part of surplus powder adheres to the distal end and the outer peripheral surface of the tip 13 due to static electricity. Such surplus powder adhering due to static electricity is effectively removed.

A sixth powder removing brush 80 and a seventh powder removing brush 90 have brush bristles 82, 92 that are both formed of conductive-material bristles having an electrostatic neutralization effect in part or as a whole. As the conductive-material bristles, for example, nylon bristles coated with conductive carbon, acrylic or nylon fibers to which copper sulfide is chemically bonded, and composites made of nylon and carbon-containing conductive material are disclosed. Bristle implanted members 81, 91 in which the brush bristles 82, 92 are implanted are also made of a conductive material. The brush bristles 82, 92 made of a conductive material can immediately neutralize static electricity by corona discharge that occurs at the time of contact with the tip 13. However, the bristle implanted members 81, 91 are preferably connected with a ground wire 171 to enhance the electrostatic neutralization effect. Although only the sixth powder removing brush 80 is provided with the ground wire 171 in Fig. 15, the seventh powder removing brush 90 can also be naturally provided with a ground wire.

Surplus powder adhering to the tip 13 can be removed by moving the tip 13 relative to the sixth powder removing brush 80 and the seventh powder removing brush 90 along the paths in Fig. 9 described above.

The powder tank cover member 170 described above is able not only to function as a cover that prevents powder within the powder tank 101 from scattering and outside dust from getting into the powder tank 101, but also to more effectively remove static-charged surplus powder adhering to the distal end and the outer peripheral surface of the tip 13 by its electrostatic neutralization function. It goes without saying that the electrostatic neutralization brush is not limited to a case in which it is used as a powder tank cover member, and an electrostatic neutralization function can be added to a simple brush without a powder tank.

### <Powder Tank Cover Member 270 with Multistage Structure>

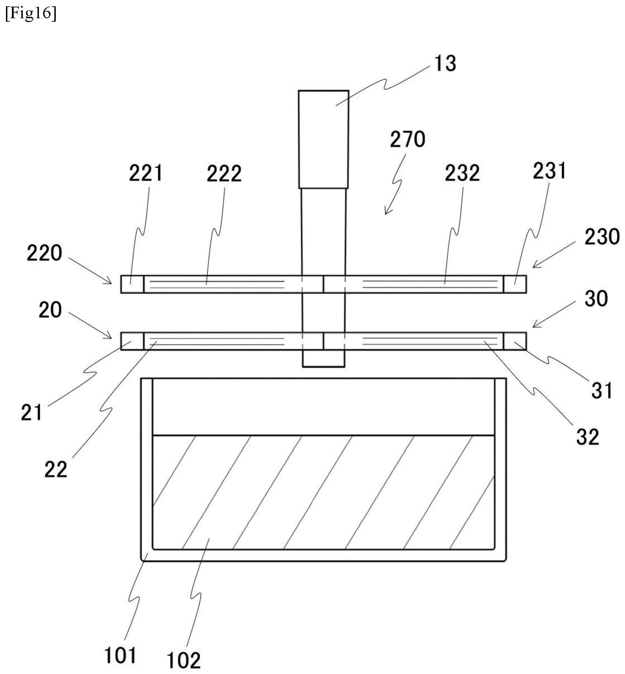

Fig. 16 is a side view of a powder tank cover member 270 with a multistage structure. This powder tank cover member 270 includes a lower-stage cover member having a first powder removing brush 20 and a second powder removing brush 30, and an upper-stage cover member having an eighth powder removing brush 220 and a ninth powder removing brush 230.

The eighth powder removing brush 220, which has the same configuration as the first powder removing brush 20, includes a bristle implanted member 221 and brush bristles 222. The ninth powder removing brush 230, which has the same configuration as the second powder removing brush 30, includes a bristle implanted member 231 and brush bristles 232. The powder removing brushes (20, 30) that constitute the lower-stage cover member and the powder removing brushes (220, 230) that constitute the upper-stage cover member are supported by a supporter, not illustrated.

Although Fig. 16 illustrates that the powder removing brushes (20, 30) constituting the lower-stage cover member and the powder removing brushes (220, 230) constituting the upper-stage cover member are spaced apart from each other, they can be disposed adjacent to each other. In this case, surplus powder adhering to a tip 13 can be removed not only by the first powder removing brush 20 and the second powder removing brush 30 but also by the eighth powder removing brush 220 and the ninth powder removing brush 230.

The powder tank cover member 270 with the multistage structure illustrated in Fig. 16 can block surplus powder scattering upward by the upper-stage cover member (220, 230) when removing surplus powder adhering to the distal end and the outer peripheral surface of the tip 13 by the first powder removing brush 20 and the second powder removing brush 30.

### <Attachment-Type Powder Tank Cover Member 370>

Fig. 17 (a) is a side view of an attachment-type powder tank cover member 370 according to an embodiment example.

The attachment-type powder tank cover member 370 includes bristle implanted members 321, 331 that are attachable to the powder tank 101, and brush bristles 322, 332. The bristle implanted member 321 and the bristle implanted member 331 are integrally formed. The bristle implanted members 321, 331 have respective hook-like engaging portions 321a, 331a, and the powder tank cover member 370 can be easily attached to the powder tank 101 by the engaging portions 321a, 331a engaging with the powder tank 101.

The powder tank cover member 370 illustrated in Fig. 17 (a) can more effectively prevent powder 102 within the powder tank 101 from scattering outside because the brush bristles 322, 332 are disposed in the powder tank 101. Note that a vibrating device that applies vibration to the powder tank cover member 370 may be provided to vibrate the powder tank cover member 370 during removal of surplus powder 103, 104. Further, vibration from this vibrating device may be transmitted to vibrate the powder tank 101.

### <Self-Supporting-Type Powder Tank Cover Member 470>

Fig. 17 (b) is a side view of a self-supporting-type powder tank cover member 470 according to an embodiment example.

The self-supporting-type powder tank cover member 470 includes bristle implanted members 421, 431 that are self-supportable in the powder tank 101, and brush bristles 422, 432. The bristle implanted member 421 and the bristle implanted member 431 are integrally formed. The bristle implanted members 421, 431 have respective ground-contacting portions 421a, 431a, and the powder tank cover member 470 can stand by itself in the powder tank 101 by placing the ground-contacting portions 421a, 431a on the powder 102 within the powder tank 101.

The powder tank cover member 470 illustrated in Fig. 17 (b) can more effectively prevent powder 102 within the powder tank 101 from scattering outside because the brush bristles 422, 432 are disposed in the powder tank 101. In addition, the powder tank cover member 470 is applicable to powder tanks 101 of various sizes because it can be installed in any powder tank 101 having an inner diameter that accommodates the powder tank cover member 470.

### <Variety of Rotating Devices>

A variety of rotating devices that rotate a tip 13 and a powder tank cover member (70, 370) relative to each other can be added to the powder supply device 1 provided with the powder tank cover member (70, 370) described above. Note that rotating operations described below may be clockwise or counterclockwise.

Fig. 18 (a) is a side view illustrating a configuration in which a tip rotating device that rotates the powder metering device 10 around a rotation axis along the vertical direction is provided in the powder supply device 1 of Fig. 14. As examples of the tip rotating device, it is disclosed that the main body 11 is provided with a rotating device such as a motor that rotates the nozzle 12 or the powder metering device 10 is mounted on the relative movement robot, not illustrated, via a rotating device such as a motor that rotates the powder metering device 10. A rotating operation by the tip rotating device can be combined with the movement of the tip 13 along the paths in Fig. 9 by the relative movement robot, not illustrated, so that surplus powder (103, 104) adhering to the tip 13 can be more effectively removed. In a state where the tip 13 is stationary, only the rotating operation by the tip rotating device may be performed to remove surplus powder (103, 104) adhering to the tip 13.

Fig. 18 (b) is a side view illustrating a configuration in which a cover member rotating device that rotates the powder tank cover member 70 around a rotation axis along the vertical direction is provided in the powder supply device 1 of Fig. 14. As an example of the cover member rotating device, it is disclosed that the supporter of the powder tank cover member 70 is provided with a rotating device such as a motor. A rotating operation by the cover member rotating device can be combined with the movement of the tip 13 along the paths in Fig. 9 by the relative movement robot, not illustrated, so that surplus powder (103, 104) adhering to the tip 13 can be more effectively removed. In a state where the tip 13 is stationary, only the rotating operation by the cover member rotating device may be performed to remove surplus powder (103, 104) adhering to the tip 13.

Fig. 18 (c) is a side view illustrating a configuration in which a powder tank rotating device that rotates the powder tank 101 around a rotation axis along the vertical direction is provided in the powder supply device 1 of Fig. 17 (a). As an example of the powder tank rotating device, it is disclosed that a table on which the powder tank is placed is provided with a rotating device such as a motor. A rotating operation by the powder tank rotating device can be combined with the movement of the tip 13 along the paths in Fig. 9 by the relative movement robot, not illustrated, so that surplus powder (103, 104) adhering to the tip 13 can be more effectively removed. In a state where the tip 13 is stationary, only the rotating operation by the powder tank rotating device may be performed to remove surplus powder (103, 104) adhering to the tip 13. In addition, a vibrating device that vibrates the table on which the powder tank is placed may be provided in combination with the rotating device.

### <Powder Sucking Device 180, 333>

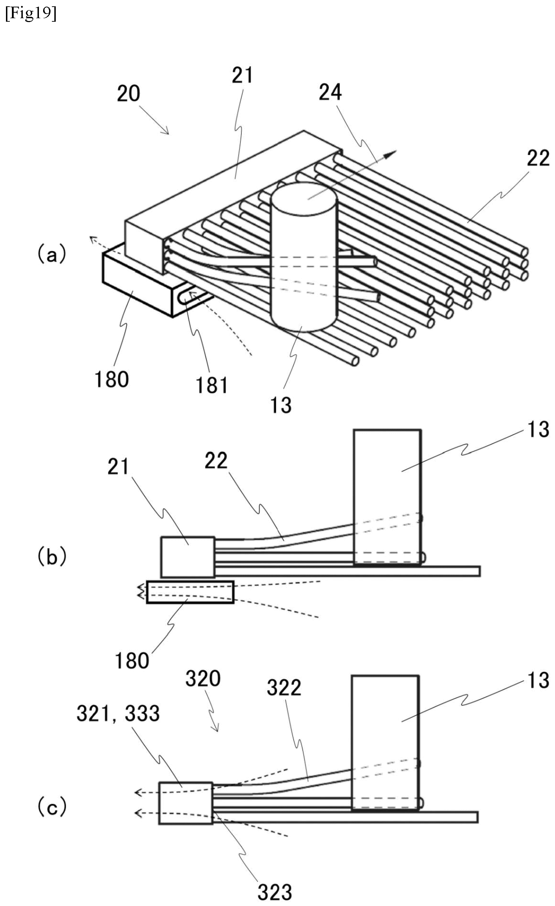

Fig. 19 (a) is a perspective view illustrating a powder removing brush 20 and a powder sucking device 180, and Fig. 19 (b) is a side view thereof. The powder sucking device 180 includes a sucking port 181 communicating with a negative pressure source, not illustrated, via an on-off valve and sucks, from the sucking port 181, surplus powder 103, 104 removed from a tip 13 by the brush bristles 22. The powder sucking device 180 disposed below the bristle implanted member 21 may be coupled to a lower surface of the bristle implanted member 21 or may be coupled to a supporter that supports the powder removing brush 20. The timing when negative pressure is brought on the sucking port 181 can be automatically controlled by a control device, not illustrated.

Fig. 19 (c) is a side view illustrating a tenth powder removing brush 320 of which bristle implanted member 321 is provided with a sucking port 323. The bristle implanted member 321 has brush bristles 322 implanted in a side surface thereof, and a plurality of sucking ports 323 are disposed in a part of the same side surface in which no brush bristles 322 are implanted. That is, the bristle implanted member 321 is provided with a powder sucking device 333. The sucking port 323 communicates with a negative pressure source, not illustrated, via an on-off valve, and surplus powder 103, 104 removed from a tip 13 by the brush bristles 322 is sucked from the sucking port 323. The timing when negative pressure is brought on the sucking port 323 can be automatically controlled by a control device, not illustrated.

The powder sucking devices 180, 333 described above can prevent surplus powder 103, 104 removed from the tip 13 from scattering outside. The powder sucking devices 180, 333 are also applicable to the powder removing brushes illustrated in Figs. 9 to 18.

### <Powder Removing Brushes 620, 630>

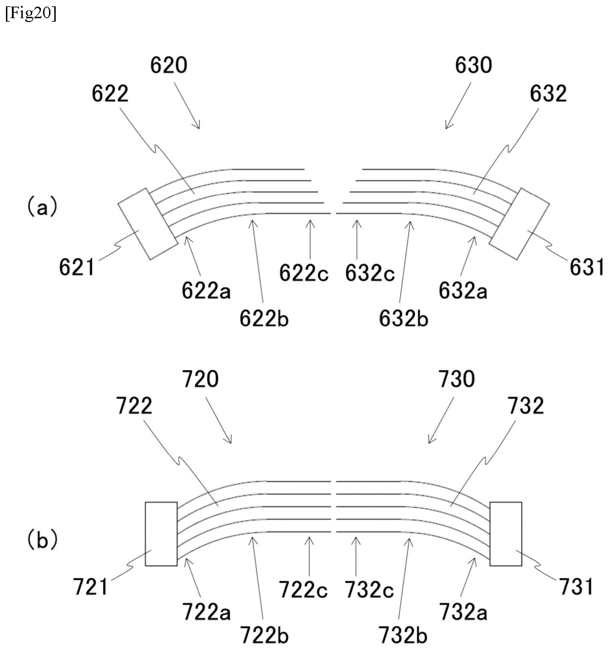

Fig. 20 (a) is a side view illustrating an eleventh powder removing brush 620 and a twelfth powder removing brush 630.

The eleventh powder removing brush 620 includes a bristle implanted member 621 disposed such that a side surface on a brush bristle 622 side faces obliquely upward, and brush bristles 622.

In the side surface of the bristle implanted member 621 disposed to face obliquely upward, the brush bristles are implanted such that a base portion 622a thereof extends perpendicularly to the side surface of the bristle implanted member 621. A reason for arranging the base portion 622a to extend obliquely upward is that sagging due to own weight occurs in a middle portion 622b and a distal end portion 622c. In other words, the brush bristles 622 are arranged to extend obliquely upward in the base portion 622a in view of the brush bristles sagging due to their own weight so that the bristles extend in the horizontal direction in the middle portion 622b and the distal end portion 622c. The effect of the present invention is achieved as long as any of the middle portion 622b and the distal end portion 622c of the brush bristles extends in the horizontal direction.

The twelfth powder removing brush 630 is provided such that a distal end portion 632c thereof and the distal end portion 622c of the eleventh powder removing brush 620 face each other. The twelfth powder removing brush 630, which has the same configuration as the eleventh powder removing brush 620, includes a bristle implanted member 631 and brush bristles 632. Also in the twelfth powder removing brush 630, the brush bristles 632 are implanted in the bristle implanted member 631 so as to extend obliquely upward in a base portion 632a. That is, the brush bristles 632 of the twelfth powder removing brush 630 are arranged to extend obliquely upward in the base portion 632a in view of the brush bristles sagging due to their own weight so that the bristles extend in the horizontal direction in a middle portion 632b and the distal end portion 632c. The effect of the present invention is achieved as long as any of the middle portion 632b and the distal end portion 632c of the brush bristles extends in the horizontal direction.

When the eleventh powder removing brush 620 and the twelfth powder removing brush 630 remove surplus powder 103, 104 adhering to a tip 13, the tip 13 should be brought into contact with the middle portions 622b, 632b or the distal end portions 622c, 632c of the brush bristles extending in the horizontal direction. For example, by moving the tip 13 along a path following the circled numbers illustrated in Fig. 9 or 11 in order, surplus powder 103, 104 can be removed. Note that the middle portion 622b, 632b means a portion between the base portion 622a, 632a and the distal end portion 622c, 632c in Fig. 20 (a).

Fig. 20 (b) is a side view illustrating a thirteenth powder removing brush 720 and a fourteenth powder removing brush 730.

The thirteenth powder removing brush 720 includes a bristle implanted member 721 that is similar to that of the first powder removing brush 20 but is different in that brush bristles 722 are implanted such that a base portion 722a thereof extends obliquely upward. Further, the thirteenth powder removing brush 720 is different from the eleventh powder removing brush 620 in that a side surface of the bristle implanted member 721 in which the brush bristles are implanted is disposed to be parallel to the vertical direction and that bristle ends of the brush bristles 722 are aligned on the same plane parallel to the vertical direction.

The thirteenth powder removing brush 720 is arranged to extend obliquely upward in the base portion 722a in view of the brush bristles sagging due to their own weight so that the bristles extend in the horizontal direction in a middle portion 722b and a distal end portion 722c. In other words, the brush bristles 722 are arranged to extend obliquely upward in the base portion 722a in view of the brush bristles sagging due to their own weight so that the bristles extend in the horizontal direction in the middle portion 722b and the distal end portion 722c. In the distal end portion 722c of the brush bristles, bristle ends from the upper layer to the lower layer are located on a plane parallel to the vertical direction. The effect of the present invention is achieved as long as any of the middle portion 722b and the distal end portion 722c of the brush bristles extends in the horizontal direction.

The fourteenth powder removing brush 730 is provided such that a distal end portion 732c thereof and the distal end portion 722c of the thirteenth powder removing brush 720 face each other. The fourteenth powder removing brush 730, which has the same configuration as the thirteenth powder removing brush 720, includes a bristle implanted member 731 and brush bristles 732. The brush bristles 732 of the fourteenth powder removing brush 730 are arranged to extend obliquely upward in the base portion 732a in view of the brush bristles sagging due to their own weight so that the bristles extend in the horizontal direction in a middle portion 732b and the distal end portion 732c. In the distal end portion 732c of the brush bristles, bristle ends from the upper layer to the lower layer are located on a plane parallel to the vertical direction. The effect of the present invention is achieved as long as any of the middle portion 732b and the distal end portion 732c of the brush bristles extends in the horizontal direction.

When the thirteenth powder removing brush 720 and the fourteenth powder removing brush 730 remove surplus powder 103, 104 adhering to a tip 13, the tip 13 should be brought into contact with the middle portions 722b, 732b or the distal end portions 722c, 732c of the brush bristles extending in the horizontal direction (for example, the paths in Fig. 9 or 11). As the thirteenth powder removing brush 720 and the fourteenth powder removing brush 730 have a gap between the brush bristles 722, 732 that is uniform from the upper layer to the lower layer, it is possible to expand a sweet spot of the distal end portions 722c, 732c for removing surplus powder 103, 104 of the tip 13 compared to the eleventh powder removing brush 620 and the twelfth powder removing brush 630. Note that the middle portion 722b, 732b means a portion between the base portion 722a, 732a and the distal end portion 722c, 732c in Fig. 20 (b).

### <Brush Guide Members 841 to 844>

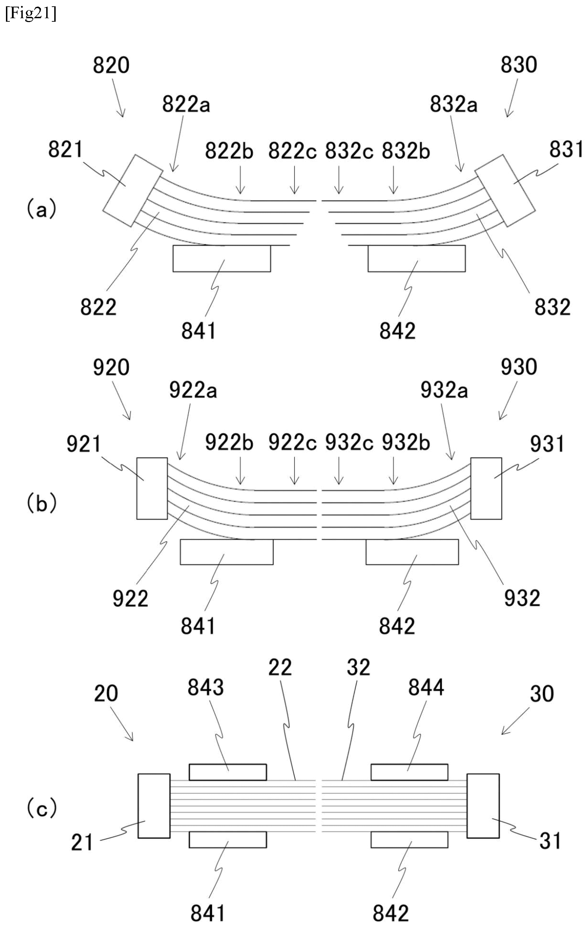

Fig. 21 (a) is a side view illustrating a fifteenth powder removing brush 820, a sixteenth powder removing brush 830, a first brush guide member 841, and a second brush guide member 842.

The fifteenth powder removing brush 820 includes a bristle implanted member 821 disposed such that a side surface on a brush bristle 822 side faces obliquely downward, and brush bristles 822. The first brush guide member 841 having a flat upper surface is disposed below a middle portion 822b of the brush bristles. In the side surface of the bristle implanted member 821 disposed to face obliquely downward, the brush bristles are implanted such that a base portion 822a thereof extends perpendicularly to the side surface of the bristle implanted member 821, and the middle portion 822b is in contact with the first brush guide member 841. Guiding action of the first brush guide member 841 causes the brush bristles to extend in the horizontal direction in the middle portion 822b and a distal end portion 822c. The effect of the present invention is achieved as long as any of the middle portion 822b and the distal end portion 822c of the brush bristles extends in the horizontal direction.

The sixteenth powder removing brush 830 is provided such that a distal end portion 832c thereof and the distal end portion 822c of the fifteenth powder removing brush 820 face each other. The sixteenth powder removing brush 830, which has the same configuration as the fifteenth powder removing brush 820, includes a bristle implanted member 831 and brush bristles 832. The second brush guide member 842 having a flat upper surface is disposed below a middle portion 832b of the brush bristles. The middle portion 832b of the brush bristles that extend obliquely downward from the side surface of the bristle implanted member 831 is in contact with the second brush guide member 842. Guiding action of the second brush guide member 842 causes the brush bristles to extend in the horizontal direction in the middle portion 832b and the distal end portion 832c. The effect of the present invention is achieved as long as any of the middle portion 832b and the distal end portion 832c of the brush bristles extends in the horizontal direction.

Since the first and second brush guide members 841, 842 function as guiding plates that support the brush bristles 822, 832 from below, the middle portions 822b, 832b and the distal end portions 822c, 832c of the brush bristles 822, 832 can extend in the horizontal direction even in a case where the bristles have a length that causes sagging due to own weight. The first and second brush guide members 841, 842 are fixedly coupled to, for example, a supporter that supports the powder removing brushes 820, 830.

When the fifteenth powder removing brush 820 and the sixteenth powder removing brush 830 remove surplus powder 103, 104 adhering to a tip 13, the tip 13 should be brought into contact with them on a path passing between the first and second brush guide members 841, 842 (for example, the paths in Fig. 9 or 11).

Fig. 21 (b) is a side view illustrating a seventeenth powder removing brush 920, an eighteenth powder removing brush 930, a first brush guide member 841, and a second brush guide member 842. As the first and second brush guide members 841, 842 are the same as those in Fig. 21 (a), description thereof will be omitted.

The seventeenth powder removing brush 920 includes a bristle implanted member 921 that is similar to that of the first powder removing brush 20 but is different in that brush bristles 922 are implanted such that a base portion 922a thereof extends obliquely downward. Further, the seventeenth powder removing brush 920 is different from the fifteenth powder removing brush 820 in that a side surface of the bristle implanted member 921 in which the brush bristles are implanted is disposed to be parallel to the vertical direction and that bristle ends of the brush bristles 922 are aligned on the same plane parallel to the vertical direction.

In the seventeenth powder removing brush 920, the guiding action of the first brush guide member 841 causes the brush bristles to extend in the horizontal direction in a middle portion 922b and a distal end portion 922c. Further, in the seventeenth powder removing brush 920, bristle ends from the upper layer to the lower layer are located on a plane parallel to the vertical direction. The effect of the present invention is achieved as long as any of the middle portion 922b and the distal end portion 922c of the brush bristles extends in the horizontal direction.

The eighteenth powder removing brush 930, which has the same configuration as the seventeenth powder removing brush 920, includes a bristle implanted member 931 and brush bristles 932. Also in the eighteenth powder removing brush 930, as in the seventeenth powder removing brush 920, the guiding action of the second brush guide member 842 causes the brush bristles to extend in the horizontal direction in a middle portion 932b and a distal end portion 932c. Further, also in the eighteenth powder removing brush 930, bristle ends from the upper layer to the lower layer are located on a plane parallel to the vertical direction. The effect of the present invention is achieved as long as any of the middle portion 932b and the distal end portion 932c of the brush bristles extends in the horizontal direction.

When the seventeenth powder removing brush 920 and the eighteenth powder removing brush 930 remove surplus powder 103, 104 adhering to a tip 13, the tip 13 should be brought into contact with them on a path passing between the first and second guide members 841, 842 (for example, the paths in Fig. 9 or 11). As the seventeenth powder removing brush 920 and the eighteenth powder removing brush 930 have a gap between the brush bristles 922, 932 that is uniform from the upper layer to the lower layer, it is possible to expand a sweet spot of the distal end portions 922c, 932c for removing surplus powder 103, 104 of the tip 13 compared to the fifteenth powder removing brush 820 and the sixteenth powder removing brush 830.

Fig. 21 (a) and (b) illustrate a mode in which brush bristles of a pair of powder removing brushes are pressed against first and second brush guide members 841, 842. However, powder removing brushes of which bristle ends extend in the horizontal direction as in Figs. 14 to 18 can also be combined with the first and second brush guide members 841, 842. It is also possible to apply the brush guide member to a single powder removing brush 20.

There is an issue where brush bristles of a powder removing brush on a bristle end side spread in an up-and-down direction after long-term use, but this issue can be solved by providing a brush guide member. Fig. 21 (c) is a side view illustrating a first powder removing brush 20, a second powder removing brush 30, and first to fourth brush guide members 841 to 844. Since the first powder removing brush 20 and the second powder removing brush 30 have been described with reference to Figs. 9 and 10, description thereof will be omitted.

The first brush guide member 841 is disposed below the brush bristles 22 at a position close to or in contact with the brush bristles 22, and the second brush guide member 842 is disposed below the brush bristles 32 at a position close to or in contact with the brush bristles 32. The third brush guide member 843 is disposed above the brush bristles 22 at a position close to or in contact with the brush bristles 22, and the fourth brush guide member 844 is disposed above the brush bristles 32 at a position close to or in contact with the brush bristles 32. In the illustrated example, the first brush guide member 841 and the third brush guide member 843, which have the same shape, are disposed to face each other. However, they do not necessarily have the same shape and may be disposed with their centers offset. The same applies to the second brush guide member 842 and the fourth brush guide member 844.

When the first powder removing brush 20 and the second powder removing brush 30 remove surplus powder 103, 104 adhering to a tip 13, the tip 13 should be brought into contact with them on a path passing between the first to fourth brush guide members 841 to 844 (for example, the paths in Fig. 9 or 11). According to the configuration of Fig. 21 (c), it is possible to prevent the issue where the brush bristles of the powder removing brushes 20, 30 on bristle end sides spread in the up-and-down direction after long-term use from occurring.

Hereinafter, details of the present invention will be described with examples. However, the technical ideas of the present invention are not limited to the examples.

### [Example 1]

### <Configuration>

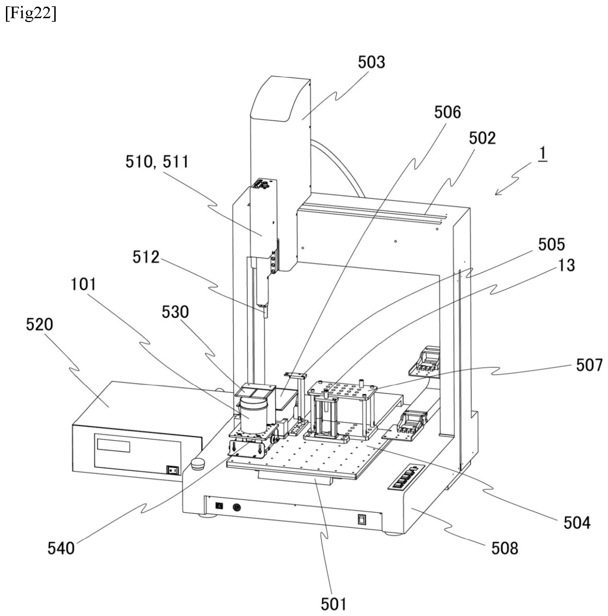

Fig. 22 is a perspective view of a desktop-type powder supply device 1 according to Example 1.

A powder metering device 510, which has the same configuration as the powder metering device 10 illustrated in Fig. 1, includes a main body 511 and a nozzle 512 and is used with a tip 13 attached to a distal end of the nozzle 512.

The powder metering device 510 is mounted on a Z-direction driving device 503 such that the nozzle 512 extends in the vertical direction, and can be positioned in a Z-direction (vertical direction). The Z-direction driving device 503 is mounted on a gate-shaped Y-direction driving device 502 and can be positioned in a Y-direction. A worktable 504, on which a powder tank 101 and the like for which the powder metering device 510 operates is mounted, is mounted on an X-direction driving device 501 and can be positioned in an X-direction. The X-direction driving device 501 is disposed on a base 508. The X-, Y-, Z-direction driving devices (501, 502, 503) are herein sometimes referred to as relative movement robot.

A control device 520 is a computer including a processing device and a storage device in which control programs for controlling operation of the powder metering device 510 and the X-, Y-, Z-direction driving devices (501, 502, 503) are stored. The control device 520 controls the X-, Y-, Z-direction driving devices (501, 502, 503) to position the powder metering device 510 at any coordinates on the worktable 504. Further, the control device 520 controls operation of a switching valve (not illustrated) that allows or blocks communication between the nozzle 512 of the powder metering device 510 and a negative pressure source (not illustrated). The control device 520 also controls operation of a vibrating device 540 to be described later.

Fig. 23 is a perspective view of a brush device 530 and the vibrating device 540 according to Example 1.

The brush device 530 includes bristle implanted members 531, 532 and brush bristles 533, 534, and is supported by a supporter 535. The supporter 535 is coupled to a vibrating table 542 of the vibrating device 540. Here, the supporter 535 may be coupled to the worktable 504 unlike the example of Fig. 23.

The bristle implanted members 531, 532, which are columnar members having inside surfaces in which respective brush bristles 533, 534 are implanted, are coupled to the supporter 535.

The brush bristles 533, 534, which are similar to the brush bristles 22, 32 of the above-described embodiment example, are groups of elastic bristles having the same length and the same diameter. The brush bristles 533, 534 are disposed such that their distal ends face each other, and a gap is provided therebetween. The width of the brush bristles 533, 534 in an extending direction of the bristle implanted members 531, 532 is large enough to cover a part of an opening of the powder tank 101. By lowering the tip 13 into the powder tank 101 at a position that is not covered by the brush bristles 533, 534 or a position of the gap, it is possible to prevent powdery dust adhering to the brush bristles 533, 534 from getting in the tip 13 or in the powder tank 101 due to contact during lowering of the tip 13. Nevertheless, under use conditions in which the issue of powdery dust adhering to the brush bristles 533, 534 does not occur, the tip 13 may be lowered at a position that is covered by the brush bristles 533, 534.

The powder tank 101, which is a cylindrical container, stores powder. Note that the shape of the powder tank 101 is not limited to the illustrated cylindrical shape, and a powder tank of any shape such as a bottle or a bag can be used.

The vibrating device 540 includes a vibrating base 541 and the vibrating table 542, and is fixed to the worktable 504 by a fixture 543. The fixture 543 may be configured integrally with the above-described supporter 535. Unlike the present example, a vibrating device that vibrates the brush device 530 may be provided so that vibration transmitted via the supporter 535 will vibrate the powder tank 101.

The vibrating base 541 includes a vibrating unit inside, such as a motor, and an On/Off operation of the vibrating unit is controlled by the control device 520. The vibrating table 542 is a table on which the powder tank 101 is placed, and the above-described brush device 530 is coupled thereto via the supporter 535. The vibrating table 542 may be provided with a holding mechanism for holding the powder tank 101. The vibrating base 541 is fixed to the worktable 504 by the fixture 543, and is moved in the X-direction together with the worktable 504 by the X-direction driving device 501.

### <Powder Supply Operation>

Operation when the powder metering device 510 supplies powder to a powder tray will be described. Here, a suitable tip 13 has been already attached to the nozzle 512 of the powder metering device 510, and the powder tray, not illustrated, has been placed on the worktable 504.

First, the control device 520 moves the powder metering device 510 above the powder tank 101 and lowers the nozzle 512 to bury the distal end of the tip 13 in powder within the powder tank 101. Next, the control device 520 opens communication between the nozzle 512 and the negative pressure source (not illustrated) and sucks powder into a metering chamber 15 in the tip 13. In the tip 13, a filter 14 that defines an upper end of the metering chamber 15 is disposed, and the metering chamber 15 is filled with the powder by the action of negative pressure (see Fig. 3).

When powder is sucked into the metering chamber 15 from the distal end of the tip 13 that is buried in the powder, the vibrating device 540 vibrates the powder tank 101. This is because the suction creates a recess in the surface of the powder within the powder tank 101, but vibrating the powder tank 101 can make circumjacent powder flow into the recess, to smooth irregularities on the surface of the powder. The recess being created in the surface of the powder within the powder tank 101 is not preferable because it causes air suction and an uneven suction flow rate. When the vibrating device 540 vibrates the powder tank 101, vibration is also transmitted to the tip 13 via the powder. Vibration of the tip 13 evenly disperses the sucked powder in the metering chamber 15, which brings an effect of providing a consistent bulk density as well. Together with this, powder may be sucked into the metering chamber 15 while applying vibration to the powder metering device 510.

After the metering chamber 15 has been filled with powder, the Z-direction driving device 503 is driven to position the powder metering device 510 in the vertical direction for removing surplus powder. The control device 520 performs the positioning such that the distal end of the tip 13 is located on an upper surface of lowermost layer bristles of the brush bristles 533, 534 as illustrated in Fig. 7 or 8, for example.

Next, the control device 520 causes the X-direction driving device 501 and the Y-direction driving device 502 to move the tip 13 and the brush device 530 relative to each other such that the tip 13 moves along the paths as illustrated in Fig. 9, for example. As a result, surplus powder (103, 104) on the distal end and the lateral peripheral surface of the tip 13 is removed.

Upon completion of the removal of the surplus powder (103, 104) on the distal end and the lateral peripheral surface of the tip 13, the control device 520 drives the X-, Y-, Z-direction driving devices (501, 502, 503) to move the powder metering device 510 above the powder tray (not illustrated), and releases the negative pressure that is applied from the negative pressure source to the metering chamber 15, or applies positive pressure, to discharge the powder in the metering chamber 15 to the powder tray (not illustrated). At this time, vibration may be applied to the tip 13 to facilitate the discharge.

Upon completion of all discharge work for one type of powder, the control device 520 drives the X-, Y-, Z-direction driving devices (501, 502, 503) to move the powder metering device 510 to a tip detachment jig 505 by which the tip 13 is detached from the distal end of the nozzle 512. The detached tip 13 is discarded to a tip disposal tray 506. In a case where there is succeeding discharge work for another type of powder, a new tip 13 in a tip tray 507 is attached to the nozzle 512, and powder suction work is performed for a powder tank 101 having the other type of powder therein in accordance with a similar procedure. At this time, it is preferable to replace the brush device 530 with a new one.

According to the powder supply device 1 of Example 1 described above, it is possible to remove, through automated work, surplus powder (103, 104) adhering to the distal end and the lateral peripheral surface of a tip 13 after powder metering suction is performed, and to perform highly accurate metering discharge. Further, by sucking powder with the vibrating device 540 vibrating the powder tank 101, it is possible to fill the metering chamber 15 with powder of a consistent bulk density.

### [Example 2]

A powder supply device 201 according to Example 2 is different from the powder supply device 1 according to Example 1 mainly in that a powder metering device 610 has a flexible pipe 612. Hereinafter, differences from Example 1 will be mainly described. Elements that are the same as those of Example 1 are denoted by the same reference symbols in the figures and description thereof will be omitted.

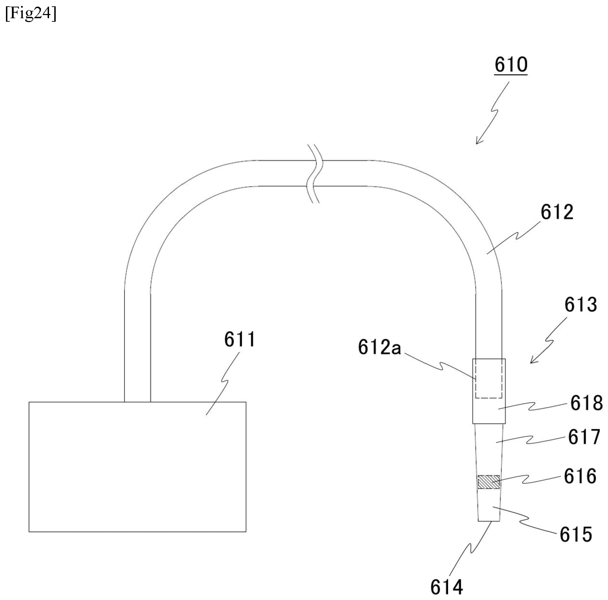

Fig. 24 is a side view of the powder metering device 610 according to Example 2. This powder metering device 610 includes a main body 611 that applies negative pressure to the flexible pipe 612, and the flexible pipe 612. The flexible pipe 612 is a flexible tube, and a distal end portion 612a of the flexible pipe constitutes a nozzle. A tip 613 is detachably attached to the distal end portion 612a of the flexible pipe. Unlike the illustrated example, a nozzle member may be coupled to the distal end portion 612a of the flexible pipe, and the tip 613 may be indirectly coupled to the flexible pipe 612 via the nozzle member. For example, a nozzle head 619 to be described later may be utilized as a nozzle member, and the tip 613 may be detachably attached to a cylindrical tip attachment portion provided in the nozzle head 619.

The tip 613 is a disposable type and includes a suction port 614, a metering chamber 615, a filter 616, a suction portion 617 having an internal space that communicates with the flexible pipe 612, and an attachment portion 618 for attachment to the flexible pipe 612. Negative pressure is applied to the metering chamber 615 from the main body 611 via the flexible pipe 612 and the filter 616. The tip 613 is similar to the tip 13 except that the metering chamber 615 and the suction portion 617 have a truncated cone shape.

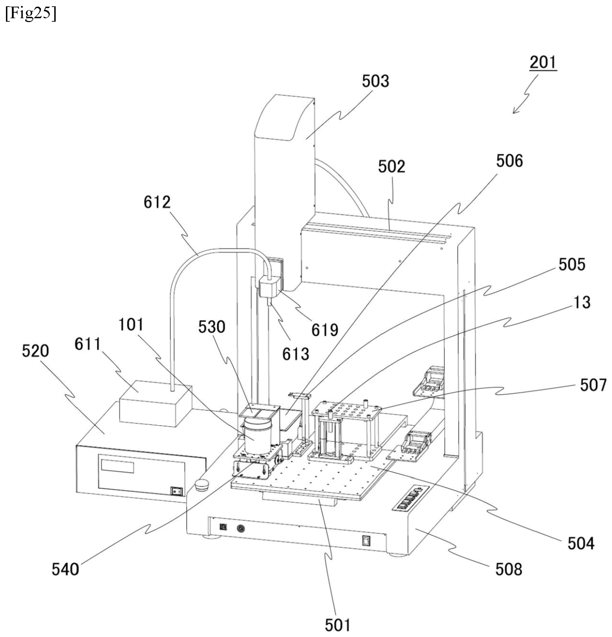

Fig. 25 is a perspective view of the powder supply device 201 according to Example 2.

The main body 611 of the powder metering device 610 is provided outside a base 508. Although the main body 611 is installed on a control device 520 in the illustrated example, the main body 611 can be installed at any location or can be incorporated in the base 508.

One end portion of the flexible pipe 612 is extended from the main body 611 and the other end portion is inserted through the nozzle head 619. The tip 613 is attached to the distal end portion 612a of the flexible pipe that is extended from the nozzle head 619. The nozzle head 619 is mounted on a Z-direction driving device 503 and can be positioned in the Z-direction (vertical direction). The Z-direction driving device 503 is mounted on a Y-direction driving device 502 and can be positioned in the Y-direction. A worktable 504 is mounted on an X-direction driving device 501, and can be positioned in the X-direction. A brush device 530 and a vibrating device 540 installed on the worktable 504 are the same as those of Example 1. Modifications of those devices described in Example 1 are also applicable to Example 2.

The flexible pipe 112 can follow movement of the nozzle head 619 while deforming, and negative pressure supplied from the main body 611 can be applied to the nozzle head 619 located at any position. A method of removing surplus powder adhering to the distal end and the outer peripheral surface of the tip 613 using the brush device 530 is the same as that of Example 1. Further, a method of sucking powder with the vibrating device 540 vibrating the powder tank 101 is also the same as that of Example 1.

According to the powder supply device 201 of Example 2 described above, it is possible to remove, through automated work, surplus powder adhering to the distal end and the lateral peripheral surface of a tip 613 after powder metering suction is performed, and to perform highly accurate metering discharge. Further, by sucking powder with the vibrating device 540 vibrating the powder tank 101, it is possible to fill the metering chamber 615 with powder of a consistent bulk density. In addition, as the nozzle head 619 is lighter than the powder metering device 510 of Example 1, it is possible to adopt a relative movement robot with smaller driving force than that of Example 1.

Preferred embodiment examples of the present invention have been described above. However, the technical scope of the present invention is not limited to the descriptions of the above-described embodiments. Various alterations and modifications can be applied to the above-described embodiment examples, and such altered or modified modes also fall within the technical scope of the present invention.

For example, the present invention is also applicable to a device with a non-disposable filling piston (suction meter and nozzle) having a metering chamber that is bounded by a filter and a suction port that is provided at its distal end as illustrated in Patent Document 2.

### List of Reference Symbols

1: powder supply device / 10: powder metering device / 11: main body (of powder metering device) / 12: nozzle / 13: tip (suction meter) / 14: filter / 15: metering chamber / 20: first powder removing brush / 21: bristle implanted member / 22: brush bristles / 23: extending direction / 24: first advancing direction / 25: first side surface/ 26: second side surface / 27: second advancing direction / 30: second powder removing brush / 31: bristle implanted member / 32: brush bristles / 40: third powder removing brush / 41: bristle implanted member / 42: brush bristles / 50: fourth powder removing brush / 51: bristle implanted member / 52: brush bristles / 60: fifth powder removing brush / 61: bristle implanted member / 62: brush bristles / 70: powder tank cover member / 80: sixth powder removing brush / 81: bristle implanted member / 82: brush bristles / 90: seventh powder removing brush / 91: bristle implanted member / 92: brush bristles / 101: powder tank / 102: powder / 103: surplus powder on outer periphery / 104: surplus powder on distal end / 105: flying powder / 106: atmosphere dust / 131: attachment portion / 132: suction portion / 133: suction port / 170: powder tank cover member with electrostatic neutralization function / 171: ground wire / 180: powder sucking device / 181: sucking port / 201: powder supply device / 220: eighth powder removing brush / 221: bristle implanted member / 222: brush bristles / 230: ninth powder removing brush / 231: bristle implanted member / 232: brush bristles / 270: cover member with multistage structure / 320: tenth powder removing brush / 321, 331, 421, 431, 621, 631, 721, 731, 821, 831, 921, 931: bristle implanted member / 322, 332, 422, 432, 622, 632, 722, 732, 822, 832, 922, 932: brush bristles / 323: sucking port / 333: powder sucking device / 370: attachment-type powder tank cover member / 470: self-supporting-type powder tank cover member / 501: X-direction driving device / 502: Y-direction driving device / 503: Z-direction driving device / 504: worktable / 505: tip detaching jig / 506: tip disposal tray / 507: tip tray / 510: powder metering device / 511: main body (of powder metering device) / 512: nozzle / 520: control device / 530: brush device / 531, 532: bristle implanted member / 533, 534: brush bristles / 535: supporter / 540: vibrating device / 541: vibrating base / 542: vibrating table / 543: fixture / 610: powder metering device / 611: main body (of powder metering device) / 612: flexible pipe / 613: tip (suction meter) / 614: suction port / 615: metering chamber / 616: filter / 617: suction portion / 618: attachment portion / 619: nozzle head / 620: eleventh powder removing brush / 630: twelfth powder removing brush / 720: thirteenth powder removing brush / 730: fourteenth powder removing brush / 820: fifteenth powder removing brush / 830: sixteenth powder removing brush / 841: first brush guide member / 842: second brush guide member / 843: third brush guide member / 844: fourth brush guide member / 920: seventeenth powder removing brush / 930: eighteenth powder removing brush

## Claims

1. A powder supply device comprising:
a suction meter having a metering chamber bounded by a filter and a suction port provided at a distal end;
a nozzle configured to apply negative pressure to the metering chamber;
a powder removing brush having brush bristles extending in a direction intersecting with a vertical direction;
a relative movement robot configured to move the suction meter and the powder removing brush relative to each other; and
a control device configured to control operation of the relative movement robot,
wherein the powder supply device is configured to bury the distal end of the suction meter in powder within a powder tank and suck the powder into the metering chamber,
wherein, after sucking the powder, the control device is configured to remove surplus powder adhering to the suction meter by performing relative movement of the suction meter and the brush bristles while elastically deforming the brush bristles.

2. The powder supply device according to claim 1, wherein the powder removing brush includes a bristle implanted member in which a great number of the brush bristles are implanted.

3. The powder supply device according to claim 2, wherein, in the bristle implanted member, the brush bristles are implanted so as to extend in a horizontal direction in a distal end portion and at least a part of a portion between the distal end portion and a base portion.

4. The powder supply device according to claim 3, wherein, in the bristle implanted member, the brush bristles are implanted so as to extend obliquely upward in the base portion.

5. The powder supply device according to claim 3, wherein, in the bristle implanted member, the brush bristles are implanted so as to extend obliquely downward in the base portion, and
the powder supply device further includes a brush bristle guide member that supports a portion between the distal end portion and the base portion of the brush bristles.

6. The powder supply device according to claim 2, wherein the brush bristles have a layered bristle structure in which brush bristle layers are stacked in an up-and-down direction.

7. The powder supply device according to claim 6, wherein, after sucking the powder, the control device can remove surplus powder adhering to an outer peripheral surface and the distal end of the suction meter by raising the suction meter such that the distal end of the suction meter is located above a lower end of a lowermost brush bristle layer of the layered bristle structure and below a lower end of an uppermost brush bristle layer and then performing the relative movement.

8. The powder supply device according to claim 1, wherein the powder removing brush includes a first powder removing brush and a second powder removing brush disposed with its bristle ends facing brush bristles of the first powder removing brush.

9. The powder supply device according to claim 8, wherein the first powder removing brush includes a first bristle implanted member in which a great number of the brush bristles are implanted so as to extend in a horizontal direction in a distal end portion and at least a part of a portion between the distal end portion and a base portion, and
the second powder removing brush includes a second bristle implanted member in which a great number of the brush bristles are implanted so as to extend in the horizontal direction in a distal end portion and at least a part of a portion between the distal end portion and a base portion.

10. The powder supply device according to claim 9, wherein, in each of the first and second bristle implanted members, the brush bristles are implanted so as to extend obliquely upward in the base portion.

11. The powder supply device according to claim 9, wherein, in each of the first and second bristle implanted members, the brush bristles are implanted so as to extend obliquely downward in the base portion, and
the powder supply device further includes a first brush bristle guide member that supports a portion between the distal end portion and the base portion of the brush bristles of the first powder removing brush, and a second brush bristle guide member that supports a portion between the distal end portion and the base portion of the brush bristles of the second powder removing brush.

12. The powder supply device according to claim 8, comprising a supporter that supports the first powder removing brush and the second powder removing brush,
wherein the first powder removing brush and the second powder removing brush constitute a cover member that covers at least a part of the powder tank.

13. The powder supply device according to claim 12, wherein the supporter includes an engaging portion for engaging with the powder tank.

14. The powder supply device according to claim 12, wherein the supporter includes a placing portion for self-support in the powder tank.

15. The powder supply device according to claim 12, wherein the first powder removing brush includes a first upper-stage removing brush and a first lower-stage removing brush,
the second powder removing brush includes a second upper-stage removing brush and a second lower-stage removing brush, and
the first upper-stage removing brush and the second upper-stage removing brush constitute an upper-stage cover member that covers at least a part of the powder tank, and the first lower-stage removing brush and the second lower-stage removing brush constitute a lower-stage cover member that covers at least a part of the powder tank.

16. The powder supply device according to claim 1, wherein the brush bristles are conductive-material bristles that neutralize static electricity on the suction meter by contact with the suction meter.

17. The powder supply device according to claim 1, wherein the brush bristles are conductive-material bristles that neutralize static electricity on the suction meter by contact with the suction meter, and
a bristle implanted member in which a great number of the brush bristles are implanted is provided, the bristle implanted member being a conductive member connected with a ground wire.

18. The powder supply device according to claim 1, wherein the powder removing brush includes a bristle implanted member having an arc-shaped inside surface in which the brush bristles are implanted, the brush bristles extending toward a center.

19. The powder supply device according to claim 1, wherein the powder removing brush includes a bristle implanted member having an arc-shaped outside surface in which the brush bristles are implanted, the brush bristles extending radially outward from the outside surface.

20. The powder supply device according to claim 1, comprising a rotating device configured to rotate the suction meter.

21. The powder supply device according to claim 1, comprising:
a powder tank table on which the powder tank is placed; and
a rotating device configured to rotate the powder tank table.

22. The powder supply device according to claim 1, comprising:
a powder tank table on which the powder tank is placed; and
a vibrating device configured to vibrate the powder tank table.

23. The powder supply device according to claim 12, comprising a rotating device configured to rotate the cover member.

24. The powder supply device according to claim 12, comprising a vibrating device configured to vibrate the cover member.

25. The powder supply device according to claim 1, wherein the suction meter is a tip that is disposable, and
the tip is detachably attached to the nozzle.

26. The powder supply device according to claim 1, wherein the suction meter is directly or indirectly connected to a distal end portion of a flexible pipe that deforms following movement of the suction meter.

27. The powder supply device according to any one of claims 1 to 26, wherein the powder supply device is a desktop type.

28. A powder removing brush for removing surplus powder adhering to a suction meter of a powder supply device including: the suction meter having a metering chamber bounded by a filter and a suction port provided at a distal end; a nozzle configured to apply negative pressure to the metering chamber; a relative movement robot configured to move the suction meter and the powder removing brush relative to each other; and a control device configured to control operation of the relative movement robot, the powder supply device being configured to bury the distal end of the suction meter in powder within a powder tank and suck the powder into the metering chamber, the powder removing brush comprising:
brush bristles extending in a direction intersecting with a vertical direction; and
a bristle implanted member in which the brush bristles are implanted.

29. The powder removing brush according to claim 28, wherein the bristle implanted member includes a first bristle implanted member and a second bristle implanted member that is disposed so as to face the first bristle implanted member.

30. The powder removing brush according to claim 29, wherein, in the first bristle implanted member, a great number of the brush bristles are implanted so as to extend in a horizontal direction in a distal end portion and at least a part of a portion between the distal end portion and a base portion, and
in the second bristle implanted member, a great number of the brush bristles are implanted so as to extend in the horizontal direction in a distal end portion and at least a part of a portion between the distal end portion and a base portion.

31. The powder removing brush according to claim 30, wherein, in each of the first and second bristle implanted members, the brush bristles are implanted so as to extend obliquely upward or downward in the base portion.

32. The powder removing brush according to claim 29, further comprising: a first brush bristle guide member that guides a portion between the distal end portion and the base portion of the brush bristles of the first bristle implanted member from below; and a second brush bristle guide member that guides a portion between the distal end portion and the base portion of the brush bristles of the second bristle implanted member from below.

33. The powder removing brush according to claim 29, further comprising: a third brush bristle guide member that guides a portion between the distal end portion and the base portion of the brush bristles of the first bristle implanted member from above; and a fourth brush bristle guide member that guides a portion between the distal end portion and the base portion of the brush bristles of the second bristle implanted member from above.

34. The powder removing brush according to claim 28, wherein the brush bristles are conductive-material bristles that neutralize static electricity on the suction meter by contact with the suction meter, and
the bristle implanted member is a conductive member connected with a ground wire.

35. A powder supply device comprising:
a suction meter having a metering chamber bounded by a filter and a suction port provided at a distal end;
a nozzle configured to be moved in a relative manner by a relative movement robot and configured to apply negative pressure to the metering chamber; and
the powder removing brush according to any one of claims 28 to 34,
wherein the powder supply device is configured to bury the distal end of the suction meter in powder within a powder tank and suck the powder into the metering chamber,
wherein, after sucking the powder, the powder supply device is configured to remove surplus powder adhering to the suction meter by moving the suction meter and the brush bristles relative to each other while elastically deforming the brush bristles.

36. A powder supply method using a powder supply device including:
a suction meter having a metering chamber bounded by a filter and a suction port provided at a distal end;
a nozzle configured to apply negative pressure to the metering chamber;
a powder removing brush having brush bristles extending in a direction intersecting with a vertical direction;
a relative movement robot configured to move the suction meter and the powder removing brush relative to each other; and
a control device configured to control operation of the relative movement robot, the powder supply method comprising:
a filling step of burying, by the relative movement robot, the distal end of the suction meter in powder within a powder tank and sucking the powder into the metering chamber;
a powder removing step of removing surplus powder adhering to the suction meter by the relative movement robot bringing the brush bristles into contact with the suction meter and moving the suction meter and the brush bristles relative to each other while elastically deforming the brush bristles; and
a discharging step of moving, by the relative movement robot, the suction meter to a predetermined position and discharging the powder in the metering chamber.

37. The powder supply method according to claim 36, wherein the powder removing step includes an outer-peripheral-surface removing step of removing surplus powder adhering to an outer peripheral surface of the suction meter and a distal-end removing step of removing surplus powder adhering to the distal end of the suction meter.

38. The powder supply method according to claim 37, wherein the brush bristles have a layered bristle structure in which brush bristle layers are stacked in an up-and-down direction,
the powder supply method includes a positioning step of raising the suction meter such that the distal end of the suction meter is located above a lower end of a lowermost brush bristle layer of the layered bristle structure and below a lower end of an uppermost brush bristle layer, the positioning step being carried out immediately after the filling step, and
in the powder removing step, the outer-peripheral-surface removing step and the distal-end removing step are concurrently executed by moving the suction meter in one direction.

39. The powder supply method according to claim 37, wherein the outer-peripheral-surface removing step includes removing surplus powder by the brush bristles sliding on the outer peripheral surface of the suction meter due to restoring force of the elastically deformed brush bristles.

40. The powder supply method according to claim 36, wherein the powder removing brush includes a first powder removing brush and a second powder removing brush disposed with its bristle ends facing brush bristles of the first powder removing brush, and
the powder removing step includes a first powder removing step of removing, by the first powder removing brush, surplus powder on a half peripheral surface of the suction meter and a second powder removing step of removing, by the second powder removing brush, surplus powder on the other half peripheral surface of the suction meter.

41. The powder supply method according to claim 40, wherein a supporter is provided to support the first powder removing brush and the second powder removing brush in a positional relationship in which the brush bristles of the first powder removing brush and the second powder removing brush are in contact or overlap with each other,
wherein, in the powder removing step, the first powder removing step and the second powder removing step are concurrently executed by moving the suction meter in one direction.

42. The powder supply method according to claim 36, wherein the powder removing brush includes a bristle implanted member having an arc-shaped side surface in which the brush bristles are implanted, the brush bristles extending toward a center,
wherein, the powder removing step is executed by moving the suction meter along an arc-shaped trajectory.

43. The powder supply method according to claim 36, wherein the powder removing brush includes a bristle implanted member having an arc-shaped outside surface in which the brush bristles are implanted, the brush bristles extending radially outward from the outside surface,
wherein, the powder removing step is executed by moving the suction meter along an arc-shaped trajectory.

44. The powder supply method according to any one of claims 36 to 43, wherein the powder removing step is performed while rotating the suction meter and the powder removing brush relative to each other.

45. The powder supply method according to any one of claims 36 to 43, wherein the filling step is performed while vibrating the powder tank.
